# EUROPEAN PATENT APPLICATION

(11) **EP 4 510 713 A1**
(43) Date of publication of application: **19.02.2025**
(21) Application number: 23799191.4
(22) Date of filing: 23.04.2023
(51) Int. Cl.: H04W 52/02, H04W 84/06, H04B 7/185

(54) **COMMUNICATION METHOD AND APPARATUS**

(30) Priority: 06.05.2022 CN 202210488607; 18.07.2022 CN 202210843113
(71) Applicant: Huawei Technologies Co., Ltd., Shenzhen, Guangdong 518129 (CN)
(72) Inventor: LI, Yongcui, Shenzhen, Guangdong 518129 (CN); PAN, Qi, Shenzhen, Guangdong 518129 (CN); NI, Hui, Shenzhen, Guangdong 518129 (CN); ZHANG, Wanqiang, Shenzhen, Guangdong 518129 (CN); WENHAM, Steven James, Shenzhen, Guangdong 518129 (CN)
(74) Representative: Isarpatent
(86) International application number: PCT/CN2023/090116
(87) International publication number: WO 2023/213204

(57) **Abstract**

This application provides a communication method and apparatus. The method may include: A terminal device receives a first timer from a network device, where the first timer indicates a first duration after which the terminal device initiates periodic connection establishment to the network device, and the first duration is greater than or equal to a duration of the terminal device in a non-coverage area of a satellite. The terminal device activates the first timer when the terminal device determines that the terminal device leaves a coverage area of the satellite. According to the solution, resources of the terminal device and the network device can be saved in a satellite discontinuous coverage scenario.

## Description

This application claims priority to Chinese Patent Application No. 202210488607.3, filed with the China National Intellectual Property Administration on May 6, 2022 and entitled "COMMUNICATION METHOD AND APPARATUS", and claims priority to Chinese Patent Application No. 202210843113.2, filed with the China National Intellectual Property Administration on July 18, 2022 and entitled "COMMUNICATION METHOD AND APPARATUS", both of which are incorporated herein by reference in their entireties.

### TECHNICAL FIELD

This application relates to the field of communication technologies, and in particular, to a communication method and apparatus.

### BACKGROUND

In consideration of economic costs, some satellites may provide discontinuous coverage. To be specific, UE connected to a satellite network may enter a non-coverage area of a satellite during some time, and cannot be connected to the network.

In the non-coverage area of the satellite, the user equipment (user equipment, UE) is in an unreachable state. If the UE initiates a periodic registration procedure or a tracking area update procedure at this time, a waste of resources is caused.

### SUMMARY

This application provides a communication method and apparatus, to reduce a waste of resources in a satellite discontinuous coverage scenario.

According to a first aspect, a communication method is provided. The method may be performed by a terminal device, or may be performed by a component (for example, a chip or a circuit) of the terminal device. This is not limited herein. For ease of description, the following uses an example in which the terminal device performs the method for description.

The method includes: The terminal device receives a first timer from a network device, where the first timer indicates a first duration after which the terminal device initiates periodic connection establishment to the network device, and the first duration is greater than or equal to a duration of the terminal device in a non-coverage area of a satellite. The terminal device activates the first timer when the terminal device determines that the terminal device leaves a coverage area of the satellite.

In an implementation, the periodic connection establishment may be periodic registration, or may be a periodic tracking area update. In other words, the first timer may be a periodic registration timer, or may be a periodic tracking area update timer.

In the solution, the terminal device receives, from the network device, the first timer indicating to initiate the periodic connection establishment, and the first duration indicated by the first timer is greater than or equal to the duration of the terminal device in the non-coverage area of the satellite. Therefore, the terminal device may activate the first timer when determining that the terminal device leaves the coverage area of the satellite, to avoid initiating periodic connection establishment in the non-coverage area of the satellite, so as to save resources.

With reference to the first aspect, in some implementations of the first aspect, the method further includes: The terminal device receives a second timer from the network device, where the second timer indicates a second duration after which the terminal device initiates periodic connection establishment to the network device. The terminal device activates the second timer when the terminal device enters an idle state and determines that the terminal device is located in the coverage area of the satellite.

In the solution, the terminal device further receives the second timer from the network device. In other words, the terminal device receives two timers from a network side. One timer (the first timer) is used when the terminal device leaves the coverage area of the satellite, and the other timer (the second timer) is used when the terminal device enters the idle state and is located in the coverage area. The solution does not affect a power saving feature of the terminal device in the coverage area, and can also ensure a power saving feature in the non-coverage area, so that effect of saving resources can be achieved.

With reference to the first aspect, in some implementations of the first aspect, the method further includes: The terminal device stops the second timer when the terminal device leaves the coverage area of the satellite.

With reference to the first aspect, in some implementations of the first aspect, the method further includes: The terminal device sends a registration request message or a tracking area update request message to the network device after the first timer expires.

With reference to the first aspect, in some implementations of the first aspect, before the terminal device activates the first timer, the method further includes: The terminal device determines, based on ephemeris information of the satellite, that the terminal device leaves the coverage area of the satellite.

With reference to the first aspect, in some implementations of the first aspect, before a terminal device receives a first timer from a network device, the method further includes: The terminal device sends first indication information to the network device, where the first indication information indicates that the terminal device supports activation of a power saving parameter when leaving the coverage area of the satellite, and the power saving parameter includes a periodic registration timer.

According to a second aspect, a communication method is provided. The method may be performed by a network device, or may be performed by a component (for example, a chip or a circuit) of the network device. This is not limited herein. For ease of description, the following uses an example in which the network device performs the method for description.

The method includes: The network device determines a first timer based on a duration of a terminal device in a non-coverage area of a satellite, where the first timer indicates a first duration after which the terminal device initiates periodic connection establishment to the network device, and the first duration is greater than or equal to the duration of the terminal device in the non-coverage area of the satellite. The network device sends the first timer to the terminal device, and indicates the terminal device to activate the first timer when the terminal device leaves a coverage area of the satellite.

In the solution, the network device sends, to the terminal device, the first timer indicating the terminal device to initiate the periodic connection establishment, and the first duration indicated by the first timer is greater than or equal to the duration of the terminal device in the non-coverage area of the satellite. Therefore, the terminal device may skip, based on the first timer, initiating periodic connection establishment in the non-coverage area, to save resources.

With reference to the second aspect, in some implementations of the second aspect, the network device activates the first timer when the network device determines that the terminal device leaves the coverage area of the satellite.

In the solution, when determining that the terminal device leaves the coverage area of the satellite, the network device activates the first timer. Before the first timer expires, the network device does not initiate paging to the terminal device, so that resources of the network device can be saved.

With reference to the second aspect, in some implementations of the second aspect, the method further includes: The network device determines the duration of the terminal device in the non-coverage area of the satellite.

With reference to the second aspect, in some implementations of the second aspect, that the network device determines the duration of the terminal device in the non-coverage area of the satellite includes:

The network device determines the duration of the terminal device in the non-coverage area of the satellite based on satellite coverage information and location information of the terminal device.

With reference to the second aspect, in some implementations of the second aspect, that the network device sends the first timer to the terminal device includes: The network device sends a message to the terminal, where the message includes a second timer and the first timer, and the second timer indicates a second duration after which the terminal device initiates periodic connection establishment to the network device.

According to a third aspect, a communication method is provided. The method may be performed by a network device, or may be performed by a component (for example, a chip or a circuit) of the network device. This is not limited herein. For ease of description, the following uses an example in which the network device performs the method for description.

The method includes: The network device determines a first timer based on a duration of a terminal device in a coverage area of a satellite and a duration of the terminal device in a non-coverage area of the satellite, where the first timer indicates a first duration after which the terminal device initiates periodic connection establishment to the network device, and the first duration is greater than or equal to a combination of the duration of the terminal device in the coverage area of the satellite and the duration of the terminal device in the non-coverage area of the satellite. The network device sends the first timer to the terminal device.

In the solution, the network device sends, to the terminal device, the first timer indicating the terminal device to initiate the periodic connection establishment, and the first duration indicated by the first timer is greater than or equal to the duration of the terminal device in the non-coverage area of the satellite and the duration of the terminal device in the coverage area. Therefore, the terminal device may activate the first timer when entering an idle state, to avoid initiating periodic connection establishment in the non-coverage area of the satellite, so as to save resources.

With reference to the third aspect, in some implementations of the third aspect, that a network device determines a first timer based on a duration of a terminal device in a coverage area of a satellite and a duration of the terminal device in a non-coverage area of the satellite includes: The network device determines a second timer, where the second timer indicates a second duration after which the terminal device initiates periodic connection establishment to the network device. The network device determines the first timer based on the duration of the terminal device in the coverage area of the satellite and the duration of the terminal device in the non-coverage area of the satellite when the network device determines that the terminal device is located in the non-coverage area of the satellite when the second timer expires.

With reference to the third aspect, in some implementations of the third aspect, the method further includes: The network device activates the first timer when the terminal device enters an idle state. The network device continues timing of the first timer when the terminal device enters a connected state from the idle state and the first timer does not expire.

With reference to the third aspect, in some implementations of the third aspect, the method further includes: The network device determines the duration of the terminal device in the coverage area of the satellite and the duration of the terminal device in the non-coverage area of the satellite.

With reference to the third aspect, in some implementations of the third aspect, that the network device determines the duration of the terminal device in the coverage area of the satellite and the duration of the terminal device in the non-coverage area of the satellite includes: The network device determines the duration of the terminal device in the coverage area of the satellite and the duration of the terminal device in the non-coverage area of the satellite based on satellite coverage information and location information of the terminal device.

According to a fourth aspect, a communication method is provided. The method includes: A network device determines a first timer based on a duration of a terminal device in a coverage area of a satellite and a duration of the terminal device in a non-coverage area, where the first timer indicates a first duration after which the network device deregisters the terminal device, and the first duration is greater than or equal to a combination of the duration of the terminal device in the coverage area of the satellite and the duration of the terminal device in the non-coverage area of the satellite. The network device activates a second timer when determining that a non-access stratum connection of the terminal device is released, where the second timer indicates a second duration after which the network device does not deregister the terminal device. The network device activates the first timer when the second timer expires.

In a possible implementation, the second timer may alternatively be described as: The second timer indicates a second duration for monitoring whether the terminal device initiates a periodic registration update procedure.

In an implementation, the first timer may correspond to a deregistration timer or a detach timer, and the second timer may correspond to a mobile reachable timer.

With reference to the fourth aspect, in some implementations of the fourth aspect, that a network device determines a first timer based on a duration of a terminal device in a coverage area of a satellite and a duration of the terminal device in a non-coverage area includes: The network device determines a third timer, where the third timer indicates a third duration after which the network device deregisters the terminal device. The network device determines the first timer based on the duration of the terminal device in the coverage area of the satellite and the duration of the terminal device in the non-coverage area of the satellite when the network device determines that the terminal device is located in the non-coverage area of the satellite when the third timer expires.

With reference to the fourth aspect, in some implementations of the fourth aspect, the method further includes: The network device determines the duration of the terminal device in the coverage area of the satellite and the duration of the terminal device in the non-coverage area.

With reference to the fourth aspect, in some implementations of the fourth aspect, that the network device determines the duration of the terminal device in the coverage area of the satellite and the duration of the terminal device in the non-coverage area includes: The network device determines the duration of the terminal device in the coverage area of the satellite and the duration of the terminal device in the non-coverage area based on satellite coverage information and location information of the terminal device.

According to a fifth aspect, a communication method is provided. The method includes: A network device determines a first timer based on a duration of a terminal device in a coverage area of a satellite and a duration of the terminal device in a non-coverage area, where the first timer indicates a first duration after which the network device does not deregister the terminal device, and the first duration is greater than or equal to a combination of the duration of the terminal device in the coverage area of the satellite and the duration of the terminal device in the non-coverage area of the satellite. The network device activates the first timer when determining that a non-access stratum connection of the terminal device is released.

In an implementation, the first timer may correspond to a mobile reachable timer.

With reference to the fifth aspect, in some implementations of the fifth aspect, that a network device determines a first timer based on a duration of a terminal device in a coverage area of a satellite and a duration of the terminal device in a non-coverage area includes: The network device determines a second timer, where the second timer indicates a second duration after which the network device does not deregister the terminal device. The network device determines the first timer based on the duration of the terminal device in the coverage area of the satellite and the duration of the terminal device in the non-coverage area of the satellite when the network device determines that the terminal device is located in the non-coverage area of the satellite when the second timer expires.

With reference to the fifth aspect, in some implementations of the fifth aspect, the method further includes: The network device determines the duration of the terminal device in the coverage area of the satellite and the duration of the terminal device in the non-coverage area.

With reference to the fifth aspect, in some implementations of the fifth aspect, that the network device determines the duration of the terminal device in the coverage area of the satellite and the duration of the terminal device in the non-coverage area includes: The network device determines the duration of the terminal device in the coverage area of the satellite and the duration of the terminal device in the non-coverage area based on satellite coverage information and location information of the terminal device.

According to a sixth aspect, a communication method is provided. The method includes: A network device determines a first timer based on a duration of a terminal device in a non-coverage area of a satellite, where the first timer indicates a first duration after which the network device deregisters or does not deregister the terminal device, and the first duration is greater than or equal to the duration of the terminal device in the non-coverage area of the satellite. The network device activates the first timer when determining that the terminal device leaves a coverage area of the satellite.

In an implementation, when the first timer indicates the first duration after which the network device deregisters the terminal device, the first timer may correspond to a deregistration timer or a detach timer. In this case, the first timer may be alternatively described as: The first timer indicates a first duration after which the network device retains a context of the terminal device.

When the first timer indicates the first duration after which the network device does not deregister the terminal device, the first timer may correspond to a mobile reachable timer. In this case, the first timer may alternatively be described as: The first timer indicates a first duration for monitoring whether the terminal device initiates a periodic registration update procedure.

With reference to the sixth aspect, in some implementations of the sixth aspect, the method further includes: The network device determines the duration of the terminal device in the non-coverage area of the satellite.

With reference to the sixth aspect, in some implementations of the sixth aspect, that the network device determines the duration of the terminal device in the non-coverage area of the satellite includes: The network device determines the duration of the terminal device in the non-coverage area of the satellite based on satellite coverage information and location information of the terminal device.

With reference to the sixth aspect, in some implementations of the sixth aspect, the method further includes: The network device determines a second duration based on configuration information and/or capability information of the terminal device, where the second duration indicates a second duration after which the terminal device is not deregistered. The network device activates a second timer when determining that a non-access stratum connection of the terminal device is released.

In an implementation, the second timer may correspond to a mobile reachable timer.

With reference to the sixth aspect, in some implementations of the sixth aspect, the method further includes: The network device determines a second timer based on configuration information and/or capability information of the terminal device, where the second timer indicates a second duration after which the terminal device is deregistered. The network device activates a third timer when determining that a non-access stratum connection of the terminal device is released, where the third timer indicates a third duration after which the network device does not deregister the terminal device. The network device activates the second timer when the third timer expires.

In an implementation, the second timer may correspond to a deregistration timer or a detach timer, and the third timer may correspond to a mobile reachable timer.

According to a seventh aspect, a communication method is provided. The method includes: A network device determines a third timer based on a duration of a terminal device in a non-coverage area of a satellite when determining that the terminal device is to leave a coverage area of the satellite, where the third timer indicates a third duration after which the terminal device initiates periodic connection establishment to the network device, and the third duration is greater than or equal to the duration of the terminal device in the non-coverage area of the satellite. The network device sends the third timer to the terminal device.

With reference to the seventh aspect, in some implementations of the seventh aspect, that a network device determines a third timer based on a duration of a terminal device in a non-coverage area of a satellite when determining that the terminal device is to leave a coverage area of the satellite includes: The network device determines the third timer based on the duration of the terminal device in the non-coverage area of the satellite when the terminal device is to leave the coverage area of the satellite and the terminal device does not support activation of a power saving parameter when leaving the coverage area of the satellite.

With reference to the seventh aspect, in some implementations of the seventh aspect, the method further includes: The network device determines that the terminal device is to leave the coverage area of the satellite. That the network device determines that the terminal device is to leave the coverage area of the satellite specifically includes: The network device receives second indication information from the terminal device, and the network device determines, based on the second indication information, that the terminal device is to leave the coverage area of the satellite. Alternatively, the network device determines that a distance between a location of the terminal device and a boundary of the coverage area of the satellite is less than a first threshold. Alternatively, the network device determines that time before the terminal device leaves the coverage area of the satellite is less than a second threshold.

With reference to the seventh aspect, in some implementations of the seventh aspect, the method includes: The network device determines that the terminal device does not support activation of the power saving parameter when leaving the coverage area of the satellite, which includes: The network device receives third indication information from the terminal device. The network device determines, based on the third indication information, that the terminal device does not support determining the power saving parameter when leaving the coverage area of the satellite.

With reference to the seventh aspect, in some implementations of the seventh aspect, the method further includes: The network device receives a registration request message from the terminal device. That the network device sends the third timer to the terminal device includes: The network device sends a registration response message to the terminal device, where the registration response message includes the third timer.

With reference to the seventh aspect, in some implementations of the seventh aspect, that the network device sends the third timer to the terminal device includes: The network device sends the third timer to the terminal device before an access network of the terminal device is released.

With reference to the seventh aspect, in some implementations of the seventh aspect, the method further includes: The network device activates the third timer when determining that the terminal device enters an idle state.

According to an eighth aspect, a communication method is provided. The method includes: A network device determines a fourth timer based on a duration of a terminal device in a non-coverage area of a satellite when determining that the terminal device is to leave a coverage area of the satellite, where the fourth timer indicates a fourth duration after which the network device deregisters the terminal device. The network device activates a mobile reachable timer when a non-access stratum connection of the terminal device is released, and activates the fourth timer when the mobile reachable timer expires.

With reference to the eighth aspect, in some implementations of the eighth aspect, that a network device determines a fourth timer based on a duration of a terminal device in a non-coverage area of a satellite when determining that the terminal device is to leave a coverage area of the satellite includes: The network device determines the fourth timer based on the duration of the terminal device in the non-coverage area of the satellite when the terminal device is to leave the coverage area of the satellite and the terminal device does not support activation of a power saving parameter when leaving the coverage area of the satellite.

With reference to the eighth aspect, in some implementations of the eighth aspect, the method further includes: The network device determines that the terminal device is to leave the coverage area of the satellite. That the network device determines that the terminal device is to leave the coverage area of the satellite specifically includes: The network device receives second indication information from the terminal device, and the network device determines, based on the second indication information, that the terminal device is to leave the coverage area of the satellite. Alternatively, the network device determines that a distance between a location of the terminal device and a boundary of the coverage area of the satellite is less than a first threshold. Alternatively, the network device determines that time before the terminal device leaves the coverage area of the satellite is less than a second threshold.

With reference to the eighth aspect, in some implementations of the eighth aspect, the method includes: The network device determines that the terminal device does not support activation of the power saving parameter when leaving the coverage area of the satellite, which includes: The network device receives third indication information from the terminal device. The network device determines, based on the third indication information, that the terminal device does not support activation of the power saving parameter when leaving the coverage area of the satellite.

According to a ninth aspect, a communication apparatus is provided. The apparatus includes: a transceiver module, configured to receive a first timer from a network device, where the first timer indicates a first duration after which the terminal device initiates periodic connection establishment to the network device, and the first duration is greater than or equal to a duration of the terminal device in a non-coverage area of a satellite; and a processing module, configured to activate the first timer when the terminal device determines that the terminal device leaves a coverage area of the satellite.

With reference to the ninth aspect, in some implementations of the ninth aspect, the transceiver module is further configured to receive a second timer from the network device, where the second timer indicates a second duration after which the terminal device initiates periodic connection establishment to the network device. The processing module is further configured to activate the second timer when the terminal device enters an idle state and is located in the coverage area of the satellite.

With reference to the ninth aspect, in some implementations of the ninth aspect, the apparatus further includes: The processing module is further configured to stop the second timer when the terminal device leaves the coverage area of the satellite.

With reference to the ninth aspect, in some implementations of the ninth aspect, the apparatus further includes: The transceiver module is further configured to send a registration request message or a tracking area update request message to the network device after the first timer expires.

With reference to the ninth aspect, in some implementations of the ninth aspect, before the terminal device activates the first timer, the apparatus further includes: The terminal device determines, based on ephemeris information of the satellite, that the terminal device leaves the coverage area of the satellite.

According to a tenth aspect, a communication apparatus is provided. The apparatus includes: a processing module, configured to determine a first timer based on a duration of a terminal device in a non-coverage area of a satellite, where the first timer indicates a first duration after which the terminal device initiates periodic connection establishment to the network device, and the first duration is greater than or equal to the duration of the terminal device in the non-coverage area of the satellite; and a transceiver module, configured to send the first timer to the terminal device, and indicate the terminal device to activate the first timer when the terminal device leaves a coverage area of the satellite.

With reference to the tenth aspect, in some implementations of the tenth aspect, the processing module is further configured to activate the first timer when the network device determines that the terminal device leaves the coverage area of the satellite.

With reference to the tenth aspect, in some implementations of the tenth aspect, the processing module is further configured to determine the duration of the terminal device in the non-coverage area of the satellite.

With reference to the tenth aspect, in some implementations of the tenth aspect, the processing module is specifically configured to determine the duration of the terminal device in the non-coverage area of the satellite based on satellite coverage information and location information of the terminal device.

With reference to the tenth aspect, in some implementations of the tenth aspect, the transceiver module is specifically configured to send a message to the terminal, where the message includes a second timer and the first timer, and the second timer indicates a second duration after which the terminal device initiates periodic connection establishment to the network device.

According to an eleventh aspect, a communication apparatus is provided. The apparatus includes: a processing module, configured to determine a first timer based on a duration of a terminal device in a coverage area of a satellite and a duration of the terminal device in a non-coverage area of the satellite, where the first timer indicates a first duration after which the terminal device initiates periodic connection establishment to the network device; and the first duration is greater than or equal to a combination of the duration of the terminal device in the coverage area of the satellite and the duration of the terminal device in the non-coverage area of the satellite; and a transceiver module, configured to send the first timer to the terminal device.

With reference to the eleventh aspect, in some implementations of the eleventh aspect, the processing module is specifically configured to: determine a second timer, where the second timer indicates a second duration after which the terminal device initiates periodic connection establishment to the network device; and determine the first timer based on the duration of the terminal device in the coverage area of the satellite and the duration of the terminal device in the non-coverage area of the satellite when the network device determines that the terminal device is located in the non-coverage area of the satellite when the second timer expires.

With reference to the eleventh aspect, in some implementations of the eleventh aspect, the transceiver module is further configured to activate the first timer when the terminal device enters an idle state, and continues timing of the first timer when the terminal device enters a connected state from the idle state and the first timer does not expire.

With reference to the eleventh aspect, in some implementations of the eleventh aspect, the processing module is further configured to determine the duration of the terminal device in the coverage area of the satellite and the duration of the terminal device in the non-coverage area of the satellite.

With reference to the eleventh aspect, in some implementations of the eleventh aspect, the processing module is specifically configured to determine the duration of the terminal device in the coverage area of the satellite and the duration of the terminal device in the non-coverage area of the satellite based on satellite coverage information and location information of the terminal device.

According to a twelfth aspect, a communication apparatus is provided. The apparatus is configured to perform any method in the first aspect to the seventh aspect. Specifically, the apparatus may include units and/or modules configured to perform the methods in the first aspect to the seventh aspect, for example, a processing module and/or a transceiver module (which may also be referred to as a communication module).

In an implementation, the apparatus is a network device. When the apparatus is the network device, the communication module may be a transceiver or an input/output interface, and the processing module may be a processor.

In an implementation, the apparatus is a chip, a chip system, or a circuit used in a network device. When the apparatus is a chip, a chip system, or a circuit used in a communication device, the communication module may be an input/output interface, an interface circuit, an output circuit, an input circuit, a pin, a related circuit, or the like on the chip, the chip system, or the circuit. The processing module may be a processor, a processing circuit, a logic circuit, or the like.

In a possible case, the apparatus is a network device or a chip, a chip system, or a circuit in the network device. In this case, the apparatus may include units and/or modules configured to perform the methods in any one of the second aspect, the third aspect, or the fourth aspect to the eighth aspect, for example, a processing module and/or a transceiver module.

In another implementation, the apparatus is a terminal device. When the apparatus is the terminal device, a communication unit may be a transceiver or an input/output interface, and a processing unit may be a processor.

In a possible case, the apparatus is a terminal device, or a chip, a chip system, or a circuit in the terminal device. In this case, the apparatus may include units and/or modules configured to perform the method in the first aspect, for example, a processing module and/or a transceiver module.

Optionally, the transceiver may be a transceiver circuit. Optionally, the input/output interface may be an input/output circuit.

According to a thirteenth aspect, a communication apparatus is provided. The apparatus includes: a memory, configured to store a program; and a processor, configured to execute the program stored in the memory. When the program stored in the memory is executed, the processor is configured to perform any method in the first aspect to the eighth aspect.

According to a fourteenth aspect, this application provides a processor, configured to perform the methods in the foregoing aspects. In a process of performing these methods, a process of sending the foregoing information and a process of obtaining/receiving the foregoing information in the foregoing methods may be understood as a process of outputting the foregoing information by the processor and a process of receiving the foregoing inputted information by the processor. When outputting the foregoing information, the processor outputs the foregoing information to a transceiver, so that the transceiver performs transmission. After the foregoing information is output by the processor, other processing may further need to be performed on the foregoing information before the foregoing information arrives at the transceiver. Similarly, when the processor receives the foregoing input information, the transceiver obtains/receives the foregoing information, and inputs the foregoing information into the processor. Further, after the transceiver receives the foregoing information, other processing may need to be performed on the foregoing information before the foregoing information is input into the processor.

Based on the principle, for example, receiving the request message in the foregoing methods may be understood as receiving input information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor instead of operations of transmitting, sending, and receiving directly performed by a radio frequency circuit and an antenna.

In an implementation process, the processor may be a processor specially configured to perform these methods, or a processor, for example, a general-purpose processor, that executes computer instructions in a memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

According to a fifteenth aspect, a computer-readable storage medium is provided. The computer-readable medium stores program code to be executed by a device, and the program code is for performing any method in the first aspect to the eighth aspect.

According to a sixteenth aspect, a computer program product including instructions is provided. When the computer program product runs on a computer, the computer is enabled to perform any method in the first aspect to the eighth aspect.

According to a seventeenth aspect, a chip is provided. The chip includes a processor and a communication interface. The processor reads, through the communication interface, instructions stored in a memory, to perform any method in the first aspect to the eighth aspect.

Optionally, in an implementation, the chip may further include the memory. The memory stores the instructions, and the processor is configured to execute the instructions stored in the memory. When the instructions are executed, the processor is configured to perform any method in the first aspect to the eighth aspect.

### BRIEF DESCRIPTION OF DRAWINGS

FIG. 1 is a schematic of a network architecture to which an embodiment of this application is applicable;
FIG. 2 is a schematic of another network architecture to which an embodiment of this application is applicable;
FIG. 3 is a diagram of a satellite communication scenario;
FIG. 4 is a diagram of a satellite discontinuous coverage scenario;
FIG. 5 is a schematic flowchart of updating a power saving parameter;
FIG. 6(a), FIG. 6(b), FIG. 6(c), FIG. 6(d), and FIG. 6(e) are schematic flowcharts of five communication methods according to embodiments of this application;
FIG. 7 is a schematic flowchart of another communication method according to an embodiment of this application;
FIG. 8 is a schematic flowchart of still another communication method according to an embodiment of this application;
FIG. 9 is a diagram of a scenario in which a power saving parameter is activated in a discontinuous coverage area according to an embodiment of this application;
FIG. 10 is a schematic flowchart of another communication method according to an embodiment of this application;
FIG. 11 is a schematic flowchart of still another communication method according to an embodiment of this application;
FIG. 12 is a schematic flowchart of still another communication method according to an embodiment of this application;
FIG. 13 is a block diagram of a communication apparatus according to an embodiment of this application;
FIG. 14 is a block diagram of a communication apparatus according to another embodiment of this application; and
FIG. 15 is a block diagram of a communication apparatus according to still another embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of" means two or more than two.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numerals in this application are for differentiation merely for ease of description, but are not for limiting the scope of this application. Sequence numbers of the foregoing processes do not mean an execution sequence, and the execution sequence of the processes should be determined based on functions and internal logic of the processes.

In the specification, claims, and accompanying drawings of this application, the terms "first", "second", "third", "fourth", and various other ordinal number terms (if existent) are intended to distinguish between similar objects but do not necessarily indicate a specific order or sequence. It should be understood that data used in this way is interchangeable in a proper circumstance, so that embodiments described herein can be implemented in an order other than the order illustrated or described herein. In addition, the terms "include" and "have" and any other variants are intended to cover a non-exclusive inclusion. For example, a process, method, system, product, or device that includes a series of steps or units is not necessarily limited to those expressly listed steps or units, but may include other steps or units not expressly listed or inherent to the process, method, product, or device.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may also be applied to a future communication system, for example, a 6th generation mobile communication system. The technical solutions provided in this application may also be applied to device-to-device (device-to-device, D2D) communication, vehicle-to-everything (vehicle-to-everything, V2X) communication, machine-to-machine (machine to machine, M2M) communication, machine type communication (machine type communication, MTC), an internet of things (internet of things, IoT) communication system, or another communication system.

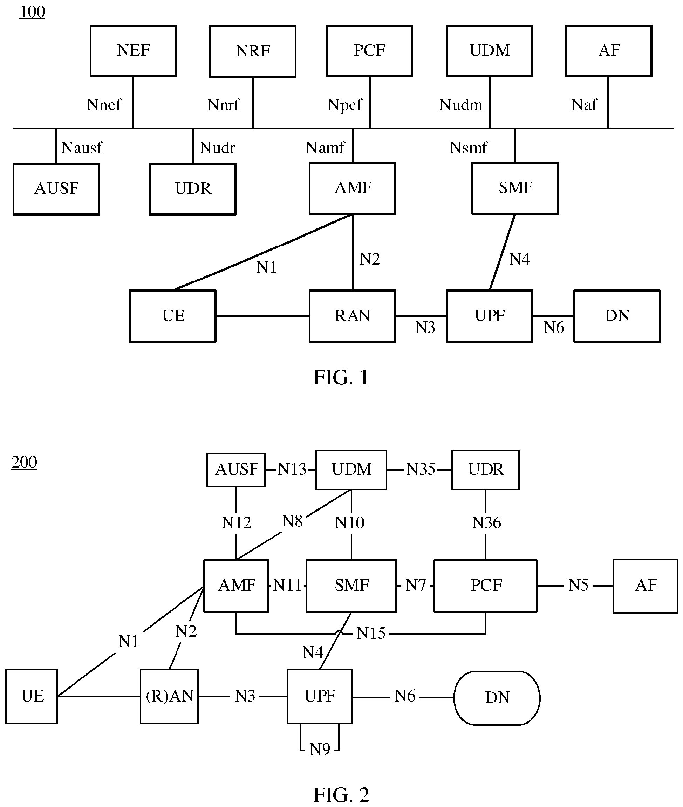

The following uses, with reference to FIG. 1, an example to describe a 5G system to which embodiments of this application are applicable. It should be understood that the 5G system described in this specification is merely an example, and should not constitute any limitation on this application.

It should be further understood that some network elements in the 5G system may communicate with each other through a service-based interface or a point-to-point interface. The following respectively describes a 5G system framework that is based on the service-based interface and a 5G system framework that is based on the point-to-point interface with reference to FIG. 1 and FIG. 2.

As an example for description, FIG. 1 is a schematic of an architecture of a 5G system 100 to which an embodiment of this application is applicable. FIG. 1 is a schematic of a 5G network architecture based on point-to-point interfaces. As shown in FIG. 1, the network architecture may include but is not limited to the following network elements (or referred to as function network elements, function entities, nodes, devices, or the like):
a (radio) access network ((radio) access network, (R)AN) device, an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an AF network element, a data network (data network, DN), a network slice selection function (network slice selection function, NSSF), an authentication server function (authentication server function, AUSF), a unified data management (unified data management, UDM), a BSF network element, a unified data repository (unified data repository, UDR), and the like.

The following briefly describes the network elements shown in FIG. 1.
1. User equipment (user equipment, UE): The user equipment may be referred to as a terminal device (terminal equipment), a terminal apparatus, an access terminal, a subscriber unit, a subscriber station, a mobile station (mobile station, MS), a mobile terminal (mobile terminal, MT), a remote station, a remote terminal, a mobile device, a user terminal, a terminal, a wireless communication device, a user agent, or a user apparatus. The terminal device may be a device that provides voice/data connectivity for a user, for example, a handheld device or a vehicle-mounted device that has a wireless connection function. Currently, some examples of the terminal may be a mobile phone (mobile phone), a tablet computer (pad), a computer (for example, a laptop or a palmtop computer) with a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a terminal device in a 5G network, or a terminal device in a future evolved public land mobile network (public land mobile network, PLMN).

In addition, the terminal device may alternatively be a terminal device in an internet of things (Internet of things, IoT) system. The IoT is an important part of future information technology development. A main technical feature of the IoT is to connect things to a network by using a communication technology, to implement a smart network for human-machine interconnection and thing-thing interconnection. In an IoT technology, massive connections, deep coverage, and power saving of a terminal may be implemented by using, for example, a narrowband (narrowband NB) technology.

In addition, the terminal device may alternatively include an intelligent printer, a train detector, and the like, and main functions include: collecting data (which is a function of some terminal devices), receiving control information and downlink data of a network device, sending an electromagnetic wave, and transmitting uplink data to the network device.

It should be understood that the user equipment may be any device that can access a network. The terminal device and the access network device may communicate with each other by using a specific air interface technology.

Optionally, the user equipment may be configured to serve as a base station. For example, the user equipment may be used as a scheduling entity that provides a sidelink signal between user equipment in V2X, D2D, or the like. For example, a cellular phone communicates with a car by using the sidelink signal. The cellular phone communicates with a smart household device without relaying a communication signal via a base station.

2. (Radio) access network ((radio) access network, (R)AN) device: The (radio) access network device is configured to provide a network access function for authorized user equipment in a specific area, and can use transmission tunnels of different quality of service based on levels, service requirements, and the like of the user equipment.

The (R)AN can manage radio resources and provide an access service for the user equipment, to forward a control signal and user equipment data between the user equipment and a core network. The (R)AN may also be understood as a base station in a conventional network.

For example, the access network device in embodiments of this application may be any communication device with a wireless transceiver function for communicating with the user equipment. The access network device includes but is not limited to an evolved NodeB (evolved NodeB, eNB), a gNB or a transmission point (TRP or TP) in a 5G system, for example, NR, or one or a group of antenna panels (including a plurality of antenna panels) of a base station in a 5G system, or may be a network node constituting a gNB or a transmission point, for example, a baseband unit (BBU) or a distributed unit (distributed unit, DU).

In some deployments, the gNB may include a central unit (central unit, CU) and the DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signalling such as RRC layer signalling may also be considered as being sent by the DU or sent by the DU and the AAU. It may be understood that the access network device may be a device including one or more of a CU node, a DU node, and an AAU node. In addition, the CU may be classified into an access network device in an access network (radio access network, RAN), or the CU may be classified into an access network device in a core network (core network, CN). This is not limited in this application.

In a satellite communication scenario, the radio access network device may also be referred to as a wireless satellite access network station (or a wireless satellite access network device or a wireless satellite access network), a satellite access network station (or a satellite access network device or a satellite access network), or a satellite network station (or referred to as a satellite network device or a satellite network). This is not limited in embodiments of this application. The satellite access network may be deployed in a plurality of manners. For example, a same PLMN has both a terrestrial 3GPP access network and a satellite 3GPP access network, and the two access networks respectively have independent interfaces with the core network. For another example, different core networks share a same satellite access network, and the shared satellite access network includes an available PLMN in broadcast system information. For another example, a terrestrial access network and the satellite access network are independent, to be specific, the terrestrial access network and the satellite access network correspond to independent PLMNs. For another example, a satellite in the sky is only responsible for signal transmission, and does not have a function of an access network. In this scenario, satellite access may also be referred to as satellite backhaul. In the foregoing nonsatellite backhaul scenario, the satellite may include all or some functions of an access network. This is not limited in this application. When all functions of the base station are integrated in the satellite, the satellite access network device may be understood as a device that is on the satellite and has some functions of the base station, and processing of related signalling and data of the access network is completely performed on the satellite. When some functions of the base station are integrated in the satellite, and some functions are located on the ground, the satellite access network device may be understood as a device that is on the satellite and has some functions of the base station and a device that is on the ground and has some functions of the base station. Processing of related signalling and data of the access network is partially performed on the satellite and partially performed on the ground. During satellite backhaul, the satellite access network device may be understood as a base station on the ground, processing of related signalling and data of the access network is completely performed on the ground, and the satellite transparently transmits the signalling and data between the terminal device and the satellite access network.

3. User plane function (user plane function, UPF) network element: The user plane function network element is used for packet routing and forwarding, quality of service (quality of service, QoS) handling for user plane data, and the like.

In a 5G communication system, a user plane network element may be the user plane function (user plane function, UPF) network element. In a future communication system, the user plane network element may still be the UPF network element, or may have another name. This is not limited in this application.

4. Access and mobility management function (access and mobility management function, AMF) network element: The access and mobility management function network element is mainly configured to perform mobility management, access management, and the like, and may be configured to implement a function other than session management in an MME function, for example, an access authorization/authentication function.

In a future communication system, an access and mobility management device may still be the AMF, or may have another name. This is not limited in this application.

5. Session management function (session management function, SMF) network element: The session management function network element is mainly configured to manage a session, allocate and manage a network interconnection protocol (internet protocol, IP) address of user equipment, select a termination point that can manage a user plane function, policy control, and a charging function interface, notify downlink data, and the like.

In a future communication system, a session management network element may still be the SMF network element, or may have another name. This is not limited in this application.

6. Policy control function (policy control function, PCF) network element: The policy control function network element is configured to guide a unified policy framework of network behavior, and provide policy rule information for a control plane function network element (for example, an AMF or an SMF), and the like.

In a future communication system, a policy control network element may still be the PCF network element, or may have another name. This is not limited in this application.

7. Application function (application function, AF): The application function is configured to perform application-affected data routing, wirelessly access a network exposure function network element, and interact with a policy framework for policy control, and the like.

In a future communication system, an application network element may still be the AF network element, or may have another name. This is not limited in this application.

8. Unified data management (unified data management, UDM) network element: The unified data management network element is configured to perform UE identifier processing, access authentication, registration, mobility management, and the like.

In a future communication system, a unified data management network element may still be the UDM network element, or may have another name. This is not limited in this application.

9. Authentication server function (authentication server function, AUSF) network element: The authentication server function network element is configured to provide an authentication service, generate a key to implement two-way authentication for user equipment, and support a unified authentication framework.

In a future communication system, an authentication server function network element may still be the AUSF network element, or may have another name. This is not limited in this application.

10. Network data analytics function (network data analytics function, NWDAF) network element: The network data analytics function network element is configured to identify a network slice instance, and load load-level information of the network slice instance. The network data analytics function may enable an NF consumer to subscribe to or unsubscribe from a periodic notification and notify the consumer when a threshold is exceeded.

In a future communication system, a network data analytics function network element may still be the NWDAF network element, or may have another name. This is not limited in this application.

11. Data network (data network, DN): The DN is a network located outside a carrier network. The carrier network may access a plurality of DNs, and a plurality of services may be deployed on the DN, and the DN may provide a service such as data and/or voice for a terminal device. For example, the DN is a private network of a smart factory, a sensor installed in a workshop of the smart factory may be the terminal device, a control server of the sensor is deployed in the DN, and the control server may serve the sensor. The sensor may communicate with the control server, to obtain instructions of the control server, transmit collected sensor data to the control server based on the instructions, and the like. For another example, the DN is an internal office network of a company, a mobile phone or a computer of an employee of the company may be the terminal device, and the mobile phone or the computer of the employee may access information, data resources, and the like in the internal office network of the company.

In FIG. 1, Nausf, Nnef, Npcf, Nudm, Naf, Namf, Nsmf, N1, N2, N3, N4, and N6 are interface sequence numbers. For meanings of these interface sequence numbers, refer to meanings defined in the 3GPP standard protocol. This is not limited herein.

In the network architecture shown in FIG. 1, the network elements may communicate with each other through interfaces shown in the figure. As shown in the figure, the UE and the AMF may interact with each other through an N1 interface, and an interaction message may be referred to as, for example, an N1 message (N1 Message). The RAN and the AMF may interact with each other through an N2 interface, and the N2 interface may be for sending a non-access stratum (non-access stratum, NAS) message and the like. The RAN and the UPF may interact with each other through an N3 interface, and the N3 interface may be for transmitting user plane data and the like. The SMF and the UPF may interact with each other through an N4 interface, and the N4 interface may be for transmitting information such as identification information of a tunnel connected to N3, data buffering indication information, and a downlink data notification message. The UPF and the DN may interact with each other through an N6 interface, and the N6 interface may be for transmitting user plane data and the like. Relationships between other interfaces and network elements are shown in FIG. 1. For brevity, details are not described herein.

FIG. 2 is a schematic of a 5G network architecture based on point-to-point interfaces. For descriptions of functions of network elements in FIG. 2, refer to the descriptions of functions of corresponding network elements in FIG. 1. Details are not described again. A main difference between FIG. 2 and FIG. 1 lies in that interfaces between network elements in FIG. 2 are point-to-point interfaces rather than service-based interfaces.

In the architecture shown in FIG. 2, names and functions of the interfaces between the network elements are as follows:
(1) N7 is an interface between a PCF and an SMF, and is configured to deliver a protocol data unit (protocol data unit, PDU) session granularity control policy and a service data flow granularity control policy.
(2) N15 is an interface between a PCF and an AMF, and is configured to deliver a UE policy and an access control policy.
(3) N5 is an interface between an AF and a PCF, and is configured to deliver an application service request and report a network event.
(4) N4 is an interface between an SMF and a UPF, and is configured to transfer information between a control plane and a user plane, including delivery of a forwarding rule, a QoS control rule, a traffic statistics rule, and the like that are from the control plane to the user plane, and information report by the user plane.
(5) N11 is an interface between an SMF and an AMF, and is configured to transfer PDU session tunnel information between a RAN and a UPF, transfer a control message to be sent to the UE, transfer radio resource control information to be sent to the RAN, and the like.
(6) N2 is an interface between an AMF and a RAN, and is configured to transfer radio bearer control information from a core network side to the RAN, and the like.
(7) N1 is an interface between an AMF and UE, is access-irrelevant, and is configured to transfer a QoS control rule and the like to the UE.
(8) N8 is an interface between an AMF and a UDM, and is used by the AMF to obtain access and mobility management-related subscription data and authentication data from the UDM, and register current mobility management-related information of UE with the UDM.
(9) N10 is an interface between an SMF and a UDM, and is used by the SMF to obtain session management-related subscription data from the UDM, and register current session-related information of UE with the UDM.
(10) N35 is an interface between a UDM and a UDR, and is used by the UDM to obtain user subscription data information from the UDR.
(11) N36 is an interface between a PCF and the UDR, and is used by the PCF to obtain policy-related subscription data and application data-related information from the UDR.
(12) N12 is an interface between the AMF and the AUSF, and is used by the AMF to initiate an authentication procedure to the AUSF, where an SUCI may be carried as a subscription identifier.
(13) N13 is an interface between the UDM and the AUSF, and is used by the AUSF to obtain a user authentication vector from the UDM, to perform an authentication procedure.

It should be understood that the names are defined merely for distinguishing between different functions, and should not constitute any limitation on this application. This application does not exclude a possibility that another name is used in the 5G network and another future network. For example, in a 6G network, a part or all of network elements may still use terms in 5G, or may use other names. The names of the interfaces between the network elements in FIG. 1 are merely examples, and the interfaces may have other names during specific implementation. This is not specifically limited in this application. In addition, names of messages (or signalling) transmitted between the network elements are merely examples, and do not constitute any limitation on functions of the messages.

It may be understood that the network elements or the functions may be network elements in a hardware device, may be software functions running on dedicated hardware, or may be virtualized functions instantiated on a platform (for example, a cloud platform). For ease of description, in this application, an example in which the network device is an access and mobility management network element AMF and the base station is a radio access network RAN is used for description subsequently.

It should be understood that the foregoing network architecture used in embodiments of this application is merely an example for description, and a network architecture applicable to embodiments of this application is not limited thereto. Any network architecture that can implement the functions of the foregoing network elements is applicable to embodiments of this application.

The network architecture and the service scenario described in embodiments of this application are intended to describe the technical solutions in embodiments of this application more clearly, and do not constitute a limitation on the technical solutions provided in embodiments of this application. A person of ordinary skill in the art may learn that the technical solutions provided in embodiments of this application are also applicable to a similar technical problem as the network architecture evolves and a new service scenario emerges.

Aspects or features in embodiments of this application may be implemented as methods, or implemented by using an apparatus or a product of standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel and various other media that can store, include and/or carry instructions and/or data.

To facilitate understanding of the technical solutions in embodiments of this application, before the solutions in embodiments of this application are described based on a 5G architecture, some terms or concepts in 5G that may be used in embodiments of this application, and network elements that may be used in this application but are not shown in the foregoing network architecture are first briefly described.

### 1. Satellite communication

A satellite communication technology is a technology in which a wireless communication device on the ground accesses a network via a satellite, or is a technology in which wireless communication devices on the ground communicate with each other by using a satellite as relay. In comparison with a conventional mobile communication system, the satellite communication has advantages, for example, has a wider coverage area, and can overcome natural geographical obstacles such as the ocean, desert, and mountain.

Based on the communication system architecture shown in FIG. 1, the satellite communication and a 5G communication system (the 5th-generation mobile communications system, 5GS) may be integrated. Currently, there may be two scenarios for convergence of the satellite communication and the 5GS. A first scenario is that a satellite is used as 3GPP access, and UE accesses the 5GS via the satellite. A second scenario is that a satellite link is used as a backhaul link, and a RAN communicates with a 5G core (5G core, 5GC) network through the backhaul link (for example, the backhaul link provides a bearer for N3 or N9).

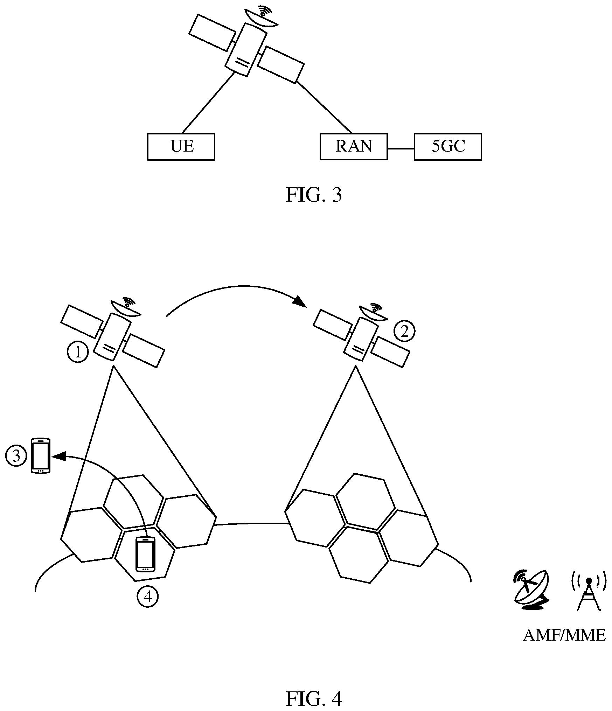

FIG. 3 is a diagram of a scenario in which satellite communication and a 5GS are converged. A satellite is in a transparent mode to only forward a signal. It can be learned from FIG. 3 that the satellite is used as 5G access, and UE is connected to a 5GC through satellite access. The 5GC may include core network elements such as the AMF, the SMF, and the UPF shown in FIG. 1. It may be understood that, in addition to the transparent mode, the satellite may also be in a regeneration mode to provide a signal processing function. For example, the satellite is used as a base station to provide a wireless access service for the UE.

It should be noted that FIG. 3 shows only one satellite. In an actual communication scenario, there may be a plurality of satellites, and types of the plurality of satellites may be the same or may be different. There is a radio link between the different satellites, so that signalling interaction and user data transmission between access network devices can be completed.

Different types of satellites may have different coverage areas, movement features, propagation delays, and jitter due to different orbit heights. For example, satellites may be classified into a geostationary equatorial orbit (geostationary equatorial orbit, GEO) satellite, a low earth orbit (low earth orbit, LEO) satellite, a polar orbit constellation, a mid earth orbit (mid earth orbit, MEO) satellite, and other satellites (Other SATs) based on orbit types.

### 2. Ephemeris information

The ephemeris information is some information related to a satellite constellation, mainly including orbit plane parameters (Orbital plane parameters) and satellite level parameters (Satellite level parameters).

### 3. Satellite discontinuous coverage

Some satellites may provide discontinuous coverage. In other words, coverage areas of the satellites are discontinuous, or the satellites have coverage areas and non-coverage areas. The coverage area herein is an area that can be covered by a network (or a signal) of the satellite, and the non-coverage area is an area that cannot be covered by the network of the satellite. For example, in a diagram of satellite coverage shown in FIG. 4, hexagon areas in the figure are the coverage area of the satellite, and an area outside the hexagons in the figure is the non-coverage area of the satellite.

In a satellite discontinuous coverage scenario, UE connected to the satellite switches between the coverage area and the non-coverage area. For example, if the UE is stationary at a location ④, and the satellite moves from a location ① to a location ②, the UE enters the non-coverage area from the coverage area. For another example, the UE moves from the location (4) to a location ③, and therefore the UE enters the non-coverage area from the coverage area. It may be understood that the UE may switch between the coverage area and the non-coverage area due to movement of the UE and the satellite.

In embodiments of this application, a duration in which the UE is located in the coverage area indicates a duration from a current moment to a moment at which the UE leaves the coverage area, that is, time during which the UE can be further covered, or indicates a duration from a current moment to a moment at which the UE enters the non-coverage area, that is, time before the UE leaves the coverage area. A duration in which the UE is located in the non-coverage area indicates a duration from entering, by the UE, the non-coverage area to leaving the non-coverage area, or indicates a duration from leaving, by the UE, the coverage area to entering the coverage area again next time.

### 4. Power saving parameter (power saving parameter)

The power saving parameter usually includes a periodic registration timer (periodic registration timer) and active time (active time). The periodic registration timer indicates a duration after which UE initiates periodic registration. After activating the periodic registration timer, the UE does not initiate the periodic registration within the duration indicated by the periodic registration timer. After the periodic registration timer expires, the UE actively initiates a periodic registration procedure to ensure a connection to a network side, so that downlink data buffered on the network side can reach the UE in a timely manner. The active time indicates a duration in which the UE can be paged. In other words, the UE can be paged by a network within the active time after entering an idle state, which may be specifically implemented in a timer manner. For example, after the UE activates the active time, the UE can be paged within a duration indicated by the active time (in other words, before the active time expires). Correspondingly, after the UE enters the idle state, the network side may page the UE within the time. Specifically, after activating the active time, the network side may page the UE within the duration indicated by the active time.

It may be understood that, in 4G, the periodic registration timer is replaced with a periodic tracking area update timer (periodic tracking area update timer).

It may be understood that the power saving parameter may further include extended discontinuous reception (extended discontinuous reception, eDRX). In this application, only the periodic registration timer and the active time are used as an example for description.

In addition, activating the power saving parameter mentioned in this application may be alternatively described as utilizing the power saving parameter, using the power saving parameter, or the like.

### 5. Mobility management parameter

It should be noted that, in addition to a power saving parameter, the mobility management parameter is further described in this application, for example, a deregistration/detach timer or a mobile reachable timer. The mobile reachable timer is for monitoring whether UE initiates a periodic registration update procedure. The mobile reachable timer is started when a NAS signalling connection (namely, a signalling connection between the UE and an AMF) of the UE is released, and is stopped when the NAS signalling connection is established. If the UE has not initiated the periodic registration update procedure after the mobility reachable timer times out, the deregistration/detach timer is started. When the deregistration/detach timer expires, in other words, times out, a network device considers that the UE is completely disconnected and there is no need to continue to retain context information of the UE, initiates an implicit deregistration/detach procedure, and deletes a context of the UE, for example, a certificate or an identifier of the UE stored on the AMF, to release resources. In this case, when accessing a network next time, the UE needs to re-initiate a registration/attach procedure.

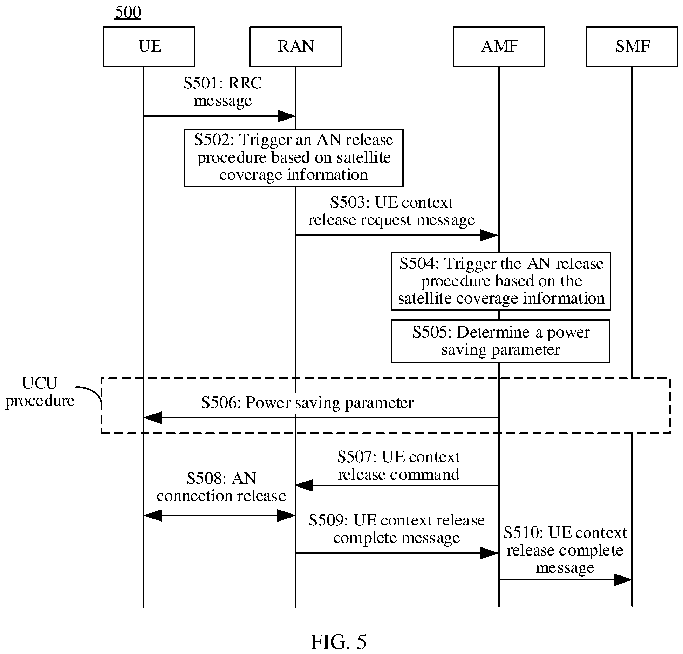

The following briefly describes a procedure of updating a power saving parameter before UE enters a non-coverage area with reference to FIG. 5.

When the UE or a network side detects that the UE is to leave a coverage area of a satellite, the UE or the network side may release a connected state (RRC_CONNECTED) by using an AN procedure. The following provides examples for description with reference to S501 to S504.

S501: The UE sends an RRC message to a RAN.

For example, when the UE detects that the UE is to leave the coverage area of the satellite, the UE may send the RRC message to the RAN to request to release an RRC connection.

S502: The RAN triggers the AN release procedure based on satellite coverage information.

For example, if the RAN detects, based on the coverage information, that the UE is to leave the coverage area of the satellite, or the RAN receives, in S501, a request from the UE for releasing the RRC connection, the RAN may trigger the AN release procedure (AN release procedure), so that the UE enters an idle state before entering the non-coverage area.

S503: The RAN sends a UE context release request message to an AMF.

Based on S502, the RAN sends the UE context release request message (UE Context Release Request message) to the AMF, to request to release a context of the UE.

S504: The AMF triggers the AN release procedure based on the satellite coverage information.

For example, if the AMF detects, based on the coverage information, that the UE is to leave the coverage area of the satellite, or the AMF receives, in S503, a request from the RAN for releasing the context of the UE, the AMF may trigger the AN release procedure before the UE enters the non-coverage area, so that the UE enters the idle state.

S505: The AMF determines the power saving parameter.

For example, the AMF determines the power saving parameter (power saving parameter) for the UE based on discontinuous coverage information (discontinuous coverage information). The AMF may obtain the coverage information based on satellite assistance information (satellite assistance information) (for example, a satellite ID or a satellite ephemeris) of the RAN. The power saving parameter may include a periodic registration timer and active time.

S506: The AMF sends the power saving parameter to the UE.

In a possible implementation, the AMF may send the power saving parameter to the UE by using a UE configuration update (UE configuration update, UCU) procedure.

S507: An SMF sends a UE context release command (UE Context Release Command) to the RAN.

S508: The RAN and the UE perform an AN connection release process.

For example, the RAN requests the UE to release an AN connection. After receiving an AN connection release acknowledgment from the UE, the RAN deletes the context of the UE.

S509: The RAN sends a UE context release complete (UE Context Release Complete) message to the AMF.

S510: The AMF sends the UE context release complete (UE Context Release Complete) message to the SMF.

For ease of understanding of embodiments of this application, the following descriptions are provided.

First, in this application, "indicate" may be understood as "enable", and "enable" may include "directly enable" and "indirectly enable". When a piece of information is described to enable A, the information may directly enable A or indirectly enable A, but it does not mean that the information definitely carries A.

Information to be enabled by the information is referred to as to-be-enabled information. In a specific implementation process, the to-be-enabled information may be enabled in many manners, for example, but not limited to, the to-be-enabled information may be directly enabled, such as the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information are known or pre-agreed on. For example, specific information may alternatively be enabled by using an arrangement order of information that is pre-agreed on (for example, stipulated in a protocol), to reduce enabling overheads to some extent. In addition, a common part of information may alternatively be identified and enabled in a unified manner, to reduce enabling overheads caused by enabling the same information separately.

Second, various numeric numbers such as first and second (for example, "#1" and "#2") shown in this application are merely for ease of description, and are for distinguishing between objects, but are not intended to limit the scope of embodiments of this application, for example, are for distinguishing between different messages, but are not for describing a specific order or sequence. It should be understood that the objects described in this way are interchangeable in an appropriate circumstance, so that a solution other than embodiments of this application can be described.

Third, the terms "include" and "have" and any other variants are intended to cover a non-exclusive inclusion. For example, a process, method, system, product, or device that includes a series of steps or units is not necessarily limited to those expressly listed steps or units, but may include other steps or units not expressly listed or inherent to the process, method, product, or device.

Fourth, in this application, "preconfiguration" may include "predefinition", for example, definition in a protocol. "Predefinition" may be implemented by prestoring corresponding code, a table, or other related information that may be used for indication in a device (for example, including network elements). A specific implementation of "predefinition" is not limited in this application.

Fifth, "store" in embodiments of this application may be storage in one or more memories. The one or more memories may be separately disposed, or may be integrated into an encoder or a decoder, a processor or a communication apparatus. Alternatively, a part of the one or more memories may be separately disposed, and a part of the one or more memories are integrated into a translator, a processor, or a communication apparatus. A type of the memory may be a storage medium in any form. This is not limited in this application.

Sixth, "protocols" in embodiments of this application may be standard protocols in the communication field, for example, may include a 5G protocol, a new radio (new radio, NR) protocol, and a related protocol applied to a future communication system. This is not limited in this application.

Seventh, in method flowcharts in the accompanying drawings of the specification of this application, dashed-line boxes indicate optional steps.

The following describes in detail communication methods provided in embodiments of this application by using interaction between network elements as an example. It should be understood that, for the terms and steps in embodiments of this application, reference may be made to each other.

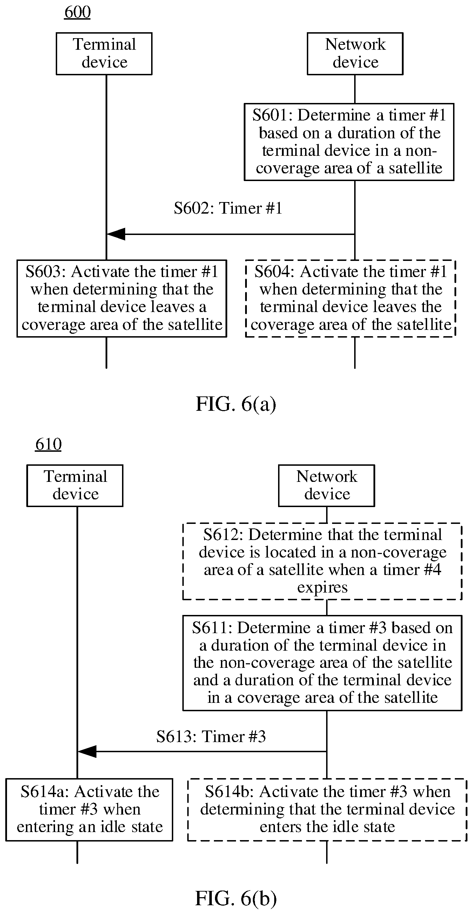

FIG. 6(a) is an example flowchart of a method 600 according to an embodiment of this application. The following describes the method 600 by using an example with reference to steps in FIG. 6(a).

S601: A network device determines a timer #1 based on a duration of a terminal device in a coverage area of a satellite.

Optionally, before S601, the network device determines the duration of the terminal device in the coverage area of the satellite based on satellite coverage information and location information of the terminal device. For a terminal device without mobility, namely, a terminal device with a fixed location, location information of the terminal device includes information about a current location of the terminal device. For a terminal device that moves in a limited area, a terminal device whose moving trajectory is known, or a terminal device whose moving trajectory is predictable, location information of the terminal device includes information about a current location of the terminal device and a moving characteristic parameter of the terminal device (for example, a moving speed, a moving direction, or a moving trajectory of the terminal device). It may be understood that the network device may alternatively obtain the moving characteristic parameter of the terminal device from a network data analytics function network element.

After determining the duration of the terminal device in the coverage area of the satellite, the network device determines the timer #1 based on the duration. The timer #1 indicates a duration #1 after which the terminal device initiates periodic connection establishment to the network device, and the duration #1 is greater than or equal to a duration of the terminal device in a non-coverage area of the satellite. The periodic connection establishment herein may be periodic registration or a periodic tracking area update. The network device herein may be a mobility management function network element or a mobility management entity.

It may be understood that the satellite in this embodiment of this application may alternatively be replaced with a constellation. For example, S601 may alternatively be: A network device determines a timer #1 based on a duration of a terminal device in a coverage area of a constellation. In this case, the network device may determine the timer #1 based on the duration of the terminal device in the coverage area of the constellation.

It may be further understood that the timer #1 in this embodiment of this application may alternatively be another type of timer. For example, the timer #1 is a timer indicating a duration after which the network device initiates paging to the terminal device. This is not limited in this application.

In an implementation, the terminal device may send first indication information to the network device, and the network device may determine the timer #1 based on the first indication information. The first indication information indicates that the terminal device supports activation of a power saving parameter when leaving the coverage area of the satellite, and the power saving parameter includes a periodic registration timer. The power saving parameter may further include any other information for power saving, for example, active time. It may be understood that the timer #1 in this embodiment of this application is a power saving parameter. Therefore, in an instance, the first indication information may alternatively be described as: The first indication information indicates that the terminal device supports activation of the timer #1 when leaving the coverage area of the satellite, or the first indication information indicates that the terminal device supports activation of the periodic registration timer when leaving the coverage area of the satellite. The network device may determine, based on the first indication information, that the terminal device supports the power saving parameter, and then the network device determines one or more power saving parameters (for example, the timer #1 in this embodiment of this application) for the terminal device. The terminal device may send the first indication information to the network device in an initial registration procedure, or may send the first indication information to the network device in another procedure. This is not limited in this application.

S602: The network device sends the timer #1 to the terminal device.

For example, after determining the timer #1, the network device sends the timer #1 to the terminal device, and indicates the terminal device to activate the timer #1 when the terminal device leaves the coverage area of the satellite.

Optionally, the network device may further send a timer #2 to the terminal device, and the timer #2 indicates a duration #2 after which the terminal device initiates periodic connection establishment to the network device. For example, the network device determines the timer #2 based on configuration information and/or capability information of the terminal device, sends the timer #2 to the terminal device, and indicates the terminal device to activate the timer #2 when the terminal device enters an idle state in the coverage area of the satellite.

It may be understood that the network device may send the timer #1 and the timer #2 to the terminal device in a same message, or may send the timer #1 and the timer #2 to the terminal device in different messages. This is not limited in this application.

It may be further understood that the network device may indicate, by using an explicit information element, the terminal device to activate the timer #1 when the terminal device leaves the coverage area of the satellite, and activate the timer #2 when the terminal device enters the idle state in the coverage area of the satellite. For example, when the network device sends the timer #1 to the terminal device, one piece of indication information #1 associated with the timer #1 is carried; and when the network device sends the timer #2 to the terminal device, one piece of indication information #2 associated with the timer #2 is carried. The indication information #1 indicates the terminal device to activate the timer #1 when the terminal device leaves the coverage area of the satellite, and the indication information #2 indicates the terminal device to activate the timer #2 when the terminal device enters the idle state in the coverage area of the satellite. Alternatively, the network device may indicate, in an implicit manner, the terminal device to activate the timer #1 when the terminal device leaves the coverage area of the satellite, and activate the timer #2 when the terminal device enters the idle state in the coverage area of the satellite. For example, the network device sequentially sends the timer #1 and the timer #2 to the terminal device, and implicitly indicates that a timer that is first sent is used when the terminal device leaves the coverage area of the satellite, and a timer that is later sent is used when the terminal device enters the idle state in the coverage area. For another example, the network device includes the timer #1 and the timer #2 in a same message, and implicitly indicates that a timer carried in the first several fields in the message is used when the terminal device leaves the coverage area of the satellite, and a timer carried in the last several fields of the message is used when the terminal device enters the idle state in the coverage area.

S603: The terminal device activates the timer #1 when determining that the terminal device leaves the coverage area of the satellite.

For example, the terminal device may determine, based on ephemeris information of the satellite, whether the terminal device is located in the coverage area of the satellite. The terminal device activates the timer #1 when determining that the terminal device leaves the coverage area of the satellite.

Optionally, if the terminal device further receives the timer #2, the terminal device activates the timer #2 when determining that the terminal device enters the idle state and is located in the coverage area of the satellite. When leaving the coverage area, the terminal device stops the timer #2, in other words, the terminal device deletes the timer #2. In other words, when leaving the coverage area and entering the non-coverage area, the terminal device activates the timer #1. If the timer #2 does not expire at this time, the terminal device stops (or deletes) the timer #2.

S604: The network device activates the timer #1 when determining that the terminal device leaves the coverage area of the satellite.

For example, the network device may determine, based on the satellite coverage information and the location information of the terminal device, whether the terminal device leaves the coverage area of the satellite, in other words, determine whether the terminal device enters the non-coverage area of the satellite; and activate the timer #1 when determining that the terminal device leaves the coverage area of the satellite.

Optionally, if the network device further determines the timer #2, the network device activates the timer #2 when the terminal device enters the idle state and is located in the coverage area of the satellite. When the terminal device leaves the coverage area, the network device stops the timer #2, in other words, the network device deletes the timer #2.

Optionally, if the terminal device does not support activation of the power saving parameter (for example, the timer #1) when leaving the coverage area of the satellite, the terminal device may send a registration request message to the network device when the terminal device is to leave the coverage area of the satellite. It may be understood that the solution may be performed after S601 to S604, or may be performed in another procedure. For example, the terminal device may initiate the initial registration procedure to the network device when determining that the terminal device does not support activation of the power saving parameter when leaving the coverage area of the satellite.

The terminal device may determine, based on the location information of the terminal device and the ephemeris information of the satellite, whether the terminal device is to leave the coverage area of the satellite. For example, when determining that a distance between a location of the terminal device and a boundary of the coverage area of the satellite is less than a first threshold, the terminal device determines that the terminal device is to leave the coverage area of the satellite. For another example, when determining that time before the terminal device leaves the coverage area of the satellite is less than a second threshold, the terminal device determines that the terminal device is to leave the coverage area of the satellite. Optionally, the terminal device may alternatively include second indication information in the registration request message, where the second indication information indicates that the terminal device is to leave the coverage area of the satellite. It may be understood that the registration request message may be a registration request message of a new type, in other words, the registration request message may correspond to a registration procedure of a new type.

Correspondingly, after receiving the registration request message from the terminal device, the network device may determine a third timer based on the satellite coverage information when determining that the terminal device is to leave the coverage area of the satellite. The third timer indicates a third duration after which the terminal device initiates periodic connection establishment to the network device, and the third duration is greater than or equal to the duration of the terminal device in the non-coverage area of the satellite. The network device may determine, based on the second indication information sent by the terminal device, or based on the location information of the terminal device and the satellite coverage information, whether the terminal device is to leave the coverage area of the satellite. For example, when determining that the distance between the location of the terminal device and the boundary of the coverage area of the satellite is less than the first threshold, the network device determines that the terminal device is to leave the coverage area of the satellite. For another example, when determining that the time before the terminal device leaves the coverage area of the satellite is less than the second threshold, the network device determines that the terminal device is to leave the coverage area of the satellite. Further, the network device sends a registration accept message to the terminal device, and includes the third timer in the registration accept message. The terminal device receives the registration accept message from the network device, and obtains the third timer from the registration accept message. The terminal device activates the third timer when entering the idle state. Correspondingly, the network device activates the third timer when determining that the terminal device enters the idle state. In the solution, the network device sends, to the terminal device, the timer #1 indicating the terminal device to initiate the periodic connection establishment, and the duration #1 indicated by the timer #1 is greater than or equal to the duration of the terminal device in the non-coverage area of the satellite. Therefore, the terminal device may activate the timer #1 when determining that the terminal device leaves the coverage area of the satellite, to avoid initiating periodic connection establishment in the non-coverage area of the satellite, so as to save resources.

FIG. 6(b) is a schematic flowchart of a method 610 according to an embodiment of this application. The following describes the method 610 by using an example with reference to steps in FIG. 6(b).

S611: A network device determines a timer #3 based on a duration of a terminal device in a non-coverage area of a satellite and a duration of the terminal device in a coverage area of the satellite.

Optionally, before S611, the network device determines the duration of the terminal device in the non-coverage area of the satellite and the duration of the terminal device in the coverage area of the satellite based on satellite coverage information and location information of the terminal device.

After the duration of the terminal device in the non-coverage area of the satellite and the duration of the terminal device in the coverage area of the satellite are determined, the timer #3 is determined based on the two durations. The timer #3 indicates a duration #3 after which the terminal device initiates periodic connection establishment to the network device, and the duration #3 is greater than or equal to a combination of the duration of the terminal device in the non-coverage area of the satellite and the duration of the terminal device in the coverage area of the satellite.

Optionally, in S612, the network device determines that the terminal device is located in the non-coverage area of the satellite when a timer #4 expires.

For example, before S611, the network device may further determine the timer #4, and the timer #4 indicates a duration #4 after which the terminal device initiates periodic connection establishment to the network device. For example, the network device determines the timer #4 based on configuration information, capability information of the terminal device, and/or the like, and then determines, based on the satellite coverage information and the location information of the terminal device, whether the terminal device is located in the non-coverage area of the satellite when the timer #4 expires. When the network device determines that the terminal device is located in the non-coverage area of the satellite when the timer #4 expires, the network device performs S611. In other words, when the network device determines that the terminal device is located in the coverage area of the satellite when the timer #4 expires, the network device may not determine the timer #3, but send the timer #4 to the terminal device.

S613: The network device sends the timer #3 to the terminal device.

For example, the network device sends the timer #3 to the terminal device after determining the timer #3. Optionally, the network device may further indicate the terminal device to activate the timer #3 when the terminal device enters an idle state.

S614a: The terminal device activates the timer #3 when entering the idle state.

Optionally, in S614b, the network device activates the timer #3 when determining that the terminal device enters the idle state.

In the solution, the network device sends, to the terminal device, the timer #3 indicating the terminal device to initiate the periodic connection establishment, and the duration #3 indicated by the timer #3 is greater than or equal to the duration of the terminal device in the non-coverage area of the satellite and the duration of the terminal device in the coverage area. Therefore, the terminal device may activate the timer #3 when entering the idle state, to avoid initiating periodic connection establishment in the non-coverage area of the satellite, so as to save resources.

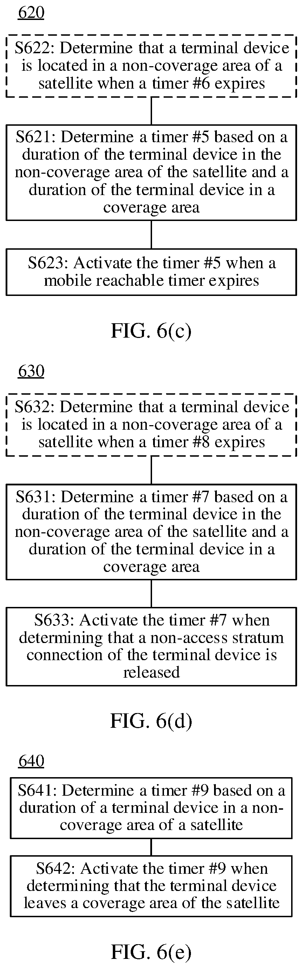

FIG. 6(c) is a block diagram of a method 620 according to an embodiment of this application. The following describes the method 600 by using an example with reference to steps in FIG. 6(c).

S621: A network device determines a timer #5 based on a duration of a terminal device in a non-coverage area of a satellite and a duration of the terminal device in a coverage area.

Optionally, before S621, the network device determines the duration of the terminal device in the coverage area of the satellite and the duration of the terminal device in the non-coverage area based on satellite coverage information and location information of the terminal device. After determining the duration of the terminal device in the coverage area of the satellite and the duration of the terminal device in the non-coverage area, the network device determines the timer #5 based on the durations. The timer #5 indicates a duration #5 after which the network device deregisters the terminal device, in other words, indicates a duration #5 after which the network device stores a context of the terminal device. After a mobile reachable timer times out, the network device retains the context of the terminal device within the duration #5 indicated by the timer #5. The duration #5 is greater than or equal to a combination of the duration of the terminal device in the non-coverage area of the satellite and the duration of the terminal device in the coverage area.

It may be understood that a specific implementation in which the network device determines the timer #5 is similar to the solution in which the network device determines the timer #3 in S611 in the method 610. Details are not described herein again.

Optionally, in S622, the network device determines that the terminal device is located in the non-coverage area of the satellite when a timer #6 expires.

For example, before S621, the network device may further determine the timer #6, and the timer #6 indicates a duration #6 after which the network device deregisters the terminal device. For example, the network device determines the timer #6 based on configuration information, capability information of the terminal device, and/or the like, and then determines, based on the satellite coverage information and the location information of the terminal device, whether the terminal device is located in the non-coverage area of the satellite when the timer #6 expires. When the network device determines that the terminal device is located in the non-coverage area of the satellite when the timer #6 expires, the network device performs S621. In other words, when the network device determines that the terminal device is located in the coverage area of the satellite when the timer #6 expires, the network device may not determine the timer #5, but determines only the timer #6.

S623: The network device activates the timer #5 when the mobile reachable timer expires.

For example, the network device activates the mobile reachable timer when a non-access stratum signalling connection of the terminal device is released. The network device activates the timer #5 when the mobile reachable timer expires. In other words, after the mobile reachable timer expires (or times out), it may be considered that the terminal device is out of a network coverage area. However, in this case, the network device may usually not immediately implicitly deregister the terminal device, but start the timer #5. Before the timer #5 expires, the network device does not page the terminal device, or the network device rejects paging initiated by another network-side network element to the terminal device. If the terminal device still does not access a network when the timer #5 expires, the network device implicitly deregisters the terminal device.

According to the solution, the network device determines the timer #5 based on the duration of the terminal device in the non-coverage area of the satellite, and enables the duration #5 corresponding to the timer #5 to be greater than or equal to the duration of the terminal device in the non-coverage area of the satellite and the duration of the terminal device in the coverage area. Therefore, when the terminal device is located in the non-coverage area of the satellite, the network device does not deregister/detach the terminal device. In this way, a case in which the terminal device re-initiates a registration procedure under network coverage because the terminal device is deregistered due to discontinuous network coverage, and consequently, the terminal device needs to be re-authenticated and re-authorized, and a context of the terminal device needs to be re-established is avoided. The solution in this application can save resources.

FIG. 6(d) is a block diagram of a method 630 according to an embodiment of this application. The following describes the method 630 by using an example with reference to steps in FIG. 6(d).

S631: A network device determines a timer #7 based on a duration of a terminal device in a non-coverage area of a satellite and a duration of the terminal device in a coverage area.

Optionally, before S631, the network device determines the duration of the terminal device in the coverage area of the satellite and the duration of the terminal device in the non-coverage area based on satellite coverage information and location information of the terminal device. After determining the duration of the terminal device in the coverage area of the satellite and the duration of the terminal device in the non-coverage area, the network device determines the timer #7 based on the durations. The timer #7 indicates a duration #7 after which the network device does not deregister the terminal device. The duration #7 is greater than or equal to a combination of the duration of the terminal device in the non-coverage area of the satellite and the duration of the terminal device in the coverage area. A function of the timer #7 may be alternatively described as being for monitoring whether the terminal device initiates a periodic registration update procedure.

It may be understood that a specific implementation in which the network device determines the timer #7 is similar to the solution in which the network device determines the timer #3 in S611 in the method 610. Details are not described herein again.

Optionally, in S632, the network device determines that the terminal device is located in the non-coverage area of the satellite when a timer #8 expires.

For example, before S631, the network device further determines the timer #8, and the timer #8 indicates a duration #8 after which the network device deregisters the terminal device. For example, the network device determines the timer #8 based on configuration information, capability information of the terminal device, and/or the like, and then determines, based on the satellite coverage information and the location information of the terminal device, whether the terminal device is located in the non-coverage area of the satellite when the timer #8 expires. When the network device determines that the terminal device is located in the non-coverage area of the satellite when the timer #8 expires, the network device performs S631. In other words, when the network device determines that the terminal device is located in the coverage area of the satellite when the timer #8 expires, the network device may not determine the timer #7, but determines only the timer #8.

S633: The network device activates the timer #7 when determining that a non-access stratum connection of the terminal device is released.

For example, when a non-access stratum signalling connection of the terminal device is released, the network device activates the timer #7. Before the timer #7 expires, the network device retains a context of the terminal device.

In the solution, the network device determines the timer #7, and the duration #7 indicated by the timer #7 is greater than or equal to the combination of the duration of the terminal device in the non-coverage area of the satellite and the duration of the terminal device in the coverage area, so that a case in which when the terminal device is located in the non-coverage area of the satellite, the terminal device cannot initiate a periodic registration/tracking area update procedure, and consequently, the network device considers that the terminal device is out of a network coverage area, starts a deregistration/detach timer, and deregisters/attaches, when the deregistration/detach timer expires or times out, the terminal device can be avoided. In this way, a case in which the terminal device re-initiates a registration/detach procedure under network coverage because the terminal device is deregistered/detached due to discontinuous network coverage, and consequently, the terminal device needs to be re-authenticated and re-authorized, and a context of the terminal device needs to be re-established is avoided. The solution in this application can save resources.

FIG. 6(e) is a schematic flowchart of a method 640 according to an embodiment of this application. The following describes the method 640 by using an example with reference to steps in FIG. 6(e).

S641: A network device determines a timer #9 based on a duration of a terminal device in a non-coverage area of a satellite.

Optionally, before S641, the network device determines a duration of the terminal device in a coverage area of the satellite based on satellite coverage information and location information of the terminal device. For a specific implementation, refer to S601 in the method 600. Details are not described herein again.

After determining the duration of the terminal device in the coverage area of the satellite, the network device determines the timer #9 based on the duration. The timer #9 is used when the terminal device is located in the non-coverage area of the satellite. The network device herein may be a mobility management function network element or a mobility management entity.

In an implementation (denoted as Manner I), the timer #9 indicates a duration #9 after which the network device deregisters the terminal device, in other words, indicates a duration #9 after which the network device stores a context of the terminal device. In other words, the timer #9 may correspond to a deregistration timer. The duration #9 is greater than or equal to a duration of the terminal device in the non-coverage area.

In another implementation (denoted as Manner II), the timer #9 indicates a duration #9 after which the network device does not deregister the terminal device, or the timer #9 indicates a duration #9 for monitoring whether the terminal device initiates a periodic registration update procedure. In other words, the timer #9 may correspond to a mobile reachable timer.

Optionally, the network device further determines a timer #10. For example, the network device determines the timer #10 based on configuration information and/or capability information of the terminal device. The timer #10 is used when the terminal device is located in the coverage area.

S642: The network device activates the timer #9 when determining that the terminal device leaves the coverage area of the satellite.

For example, the network device may determine, based on the satellite coverage information and the location information of the terminal device, whether the terminal device leaves the coverage area of the satellite, in other words, determine whether the terminal device enters the non-coverage area of the satellite; and activate the timer #9 when determining that the terminal device leaves the coverage area of the satellite.

Optionally, if the network device further determines the timer #10, when the terminal device is located in the coverage area, the network device may activate the timer #10 based on a mechanism set by the network device. For example, when the timer #10 is a deregistration timer, and the network device determines that the mobile reachable timer expires, if the terminal device is located in the coverage area, the network device activates the timer #10. For another example, when the timer #10 is a mobile reachable timer, and the network device determines that non-access stratum signalling of the terminal device is released and the terminal device is located in the coverage area of the satellite, the network device activates the timer #10.

In the solution, the network device determines the timer #9 based on the duration of the terminal device in the non-coverage area of the satellite, and a duration #1 indicated by a timer #1 is greater than or equal to the duration of the terminal device in the non-coverage area of the satellite. Therefore, when the terminal device is located in the non-coverage area of the satellite, the network device does not deregister/detach the terminal device. In this way, a case in which the terminal device re-initiates a registration procedure under network coverage because the terminal device is deregistered due to discontinuous network coverage, and consequently, the terminal device needs to be re-authenticated and re-authorized, and a context of the terminal device needs to be re-established can be avoided. The solution in this application can save resources.

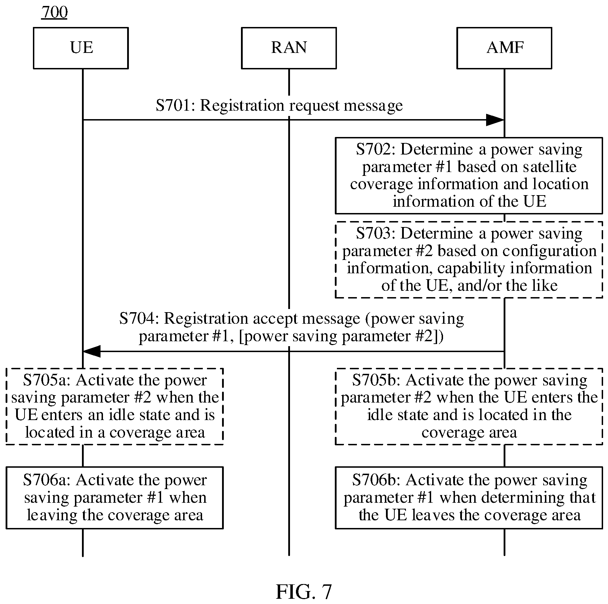

FIG. 7 is an example flowchart of a method 700 according to an embodiment of this application. In the method 700, an AMF provides, for UE, a power saving parameter #1 used when the UE is located in a non-coverage area, so that a power saving feature of the UE in the non-coverage area can be implemented, and a case in which the power saving parameter needs to be updated for the UE for a plurality of times can be avoided. The following describes the method 700 by using an example with reference to steps in FIG. 7.

S701: The UE sends a registration request (Registration request) message to the AMF. Correspondingly, the AMF receives the registration request message from the UE.

For example, the UE sends the registration request message to the AMF via a RAN, to trigger a registration procedure (Registration procedure). It should be understood that the method 600 is described by using an example in which the method provided in this application is applied to a 5G communication system. However, it should be understood that the method provided in this application may be further applied to another communication system, for example, a 4G communication system or a future 6G communication system. When this embodiment is applied to the 4G communication system, the AMF in the method 600 may be replaced with an MME. In this case, the registration procedure in the method 600 may be replaced with an attach procedure (Attach procedure) or a tracking area update (tracking area update, TAU) procedure. For example, S701 may be replaced with that the UE sends an attach request (Attach Request) message to the MME via the RAN, to trigger the attach procedure.

S702: The AMF determines the power saving parameter #1 based on satellite coverage information (satellite coverage information) and location information of the UE.

For example, the AMF determines, based on the satellite coverage information and the location information of the UE, a duration of the UE in the non-coverage area, and then the AMF determines the power saving parameter #1 based on the duration. The power saving parameter #1 includes a periodic registration timer #1, a duration corresponding to the periodic registration timer #1 is greater than or equal to the duration of the UE in the non-coverage area, and the power saving parameter #1 is used when the UE is located in the non-coverage area. Therefore, S702 may alternatively be described as: The AMF determines the power saving parameter #1 based on the duration of the UE in the non-coverage area. S702 may alternatively be described as: The AMF determines the power saving parameter based on discontinuous coverage information of the UE.

For example, assuming that the duration of the UE in the non-coverage area or a duration of the UE in a non-coverage area provided by a satellite network is 10 hours, the AMF may determine one or more of the following information:
(1) The duration corresponding to the periodic timer #1 is greater than or equal to 10 hours.
(2) A duration corresponding to active time is 0.
(3) A duration corresponding to a mobility reachable timer is greater than or equal to 10 hours.
(4) A duration corresponding to a deregistration/detach timer is greater than or equal to 10 hours.

(3) and (4) are mobility management parameters #1.

For UE without mobility, namely, UE with a fixed location, location information of the UE includes information about a current location (UE location) of the UE. For UE that moves in a limited area, UE whose moving trajectory is known, or UE whose moving trajectory is predictable, location information of the UE includes information about a current location of the UE and a moving characteristic parameter of the UE (for example, a moving speed, a moving direction, or a moving trajectory of the UE).

It may be understood that the AMF may alternatively obtain the moving characteristic parameter of the terminal device from a network data analytics function (network data analytics function, NWDAF) network element.

It may be further understood that the AMF may determine the satellite coverage information based on ephemeris information and the location information of the UE. Therefore, step S702 may alternatively be described as: The AMF determines the power saving parameter #1 based on the ephemeris information and the location information of the UE. In the 4G communication system, the periodic registration timer in this embodiment of this application may be alternatively replaced with a periodic tracking area update timer (pTAU timer). This is not described again in similar parts below.

Optionally, in S703, the AMF determines a power saving parameter #2 based on configuration information, capability information of the UE, and/or the like.

For example, the AMF may further determine the power saving parameter #2. For a specific manner, refer to an existing protocol. Details are not described herein. It should be noted that the power saving parameter #2 includes the active time and/or a periodic registration timer #2, and the power saving parameter #2 is used when the UE is located in a coverage area and enters an idle state.

It should be noted that the AMF may further determine a mobility management parameter #2. When the UE is located in the coverage area of a satellite, the AMF uses the mobility management parameter #2.

S704: The AMF sends a registration accept (Registration Accept) message to the UE, where the registration accept message includes the power saving parameter #1, and optionally, further includes the power saving parameter #2. Correspondingly, the UE receives the registration accept message from the AMF.

It should be noted that this embodiment of this application is described by using an example in which the AMF determines the power saving parameter #1 and the power saving parameter #2 in the registration procedure and provides the power saving parameter #1 and the power saving parameter #2 for the UE. However, the AMF may alternatively determine the power saving parameter #1 and the power saving parameter #2 in another procedure (or on another occasion). For example, the AMF may determine the power saving parameter #1 and the power saving parameter #2 in a UCU procedure. This is not limited in this application.

It should be further noted that the AMF may alternatively determine the power saving parameter #1 and the power saving parameter #2 in different procedures (or on different occasions). For example, the AMF determines the power saving parameter #1 in the registration procedure, and determines the power saving parameter #2 in the UCU procedure. This is not limited in this application.

It should be noted that for a mobility management parameter, for example, a mobility reachable timer or a deregistration/detach timer, the registration accept message does not need to include the mobility management parameter.

Optionally, in S705a, when the UE enters the idle state and is located in the coverage area, the UE activates the power saving parameter #2.

For example, when the UE receives the power saving parameter #2 from the AMF, if the UE is located in the coverage area and enters the idle state, the UE activates the power saving parameter #2. For example, the UE activates the periodic registration timer #2, and initiates a periodic registration procedure after the periodic registration timer #2 expires.

Optionally, in S705b, when the UE enters the idle state and is located in the coverage area, the AMF activates the power saving parameter #2.

For example, when the AMF sends the power saving parameter #2 to the UE, if the UE is located in the coverage area and enters the idle state, the AMF activates the power saving parameter #2. For example, the AMF activates the active time, and before the active time expires, the AMF may page the UE.

S706a: The UE activates the power saving parameter #1 when leaving the coverage area.

For example, when the UE leaves the coverage area, in other words, when the UE enters the non-coverage area, the UE activates the power saving parameter #1, for example, the UE activates the periodic registration timer #1, and initiates a periodic registration procedure after the periodic registration timer #1 expires. It should be understood that, if the power saving parameter #2 is still in an active state when the UE enters the non-coverage area, in other words, timing of the active time or the periodic registration timer #2 corresponding to the power saving parameter #2 does not ends, the UE stops the timer corresponding to the power saving parameter #2. That the UE stops the timer corresponding to the power saving parameter #2 may alternatively be described as: The UE deletes the timer corresponding to the power saving parameter #2. It should be further understood that the UE may determine, based on the ephemeris information of the satellite, when the UE leaves the coverage area of the satellite. A specific manner is not limited in this application.

For example, when entering the non-coverage area, the UE activates the power saving parameter #1. For example, the UE activates the active time. In this case, the active time is 0.

It should be noted that the UE may alternatively initiate the periodic registration procedure when leaving the non-coverage area, in other words, when re-entering the coverage area. In other words, when the UE leaves the non-coverage area, if the timer (for example, the periodic registration timer #1) corresponding to the power saving parameter #1 does not expire, the UE may stop the timer and initiate the periodic registration procedure.

S706b: The AMF activates the power saving parameter #1 when determining that the UE leaves the coverage area.

For example, when determining, based on the satellite coverage information, that the UE leaves the coverage area, the AMF activates the power saving parameter #1. Specifically, for example, the AMF determines, based on the satellite coverage information, time at which the UE leaves the coverage area, in other words, determines time at which the UE enters the non-coverage area, and activates the power saving parameter #1 at this time. For example, when determining the time at which the UE enters the non-coverage area, the AMF activates the periodic registration timer #1.

For example, when determining that the UE leaves the coverage area, the AMF activates the mobility management parameter #1.

In the solution, the AMF may provide two sets of power saving parameters for the terminal device. One set of power saving parameter (the power saving parameter #2) is used when the UE is in the idle state and is located in the coverage area, and the other set of power saving parameter (the power saving parameter #1) is used when the UE leaves the coverage area. The duration of the timer included in the power saving parameter #1 is designed, so that the UE does not initiate periodic registration in the coverage area, and when the UE initiates periodic registration (or when the UE is woken up, or when the periodic registration timer expires), the UE is located in the coverage area of the satellite.

In addition, in the solution, the AMF may determine two sets of mobility management parameters. One set of mobility management parameters (the mobility management parameter #2) is used when the UE is located in the coverage area, and the other set of mobility management parameters (the mobility management parameter #1) is used when the UE leaves the coverage area. The duration corresponding to the mobility management parameter #1 is properly designed, so that when the UE is located in the non-coverage area, the UE is not deregistered/detached. In this way, processes such as re-authentication, re-authorization, and UE context re-establishment that are needed for the UE to re-access the network are avoided, thereby saving resources or signalling.

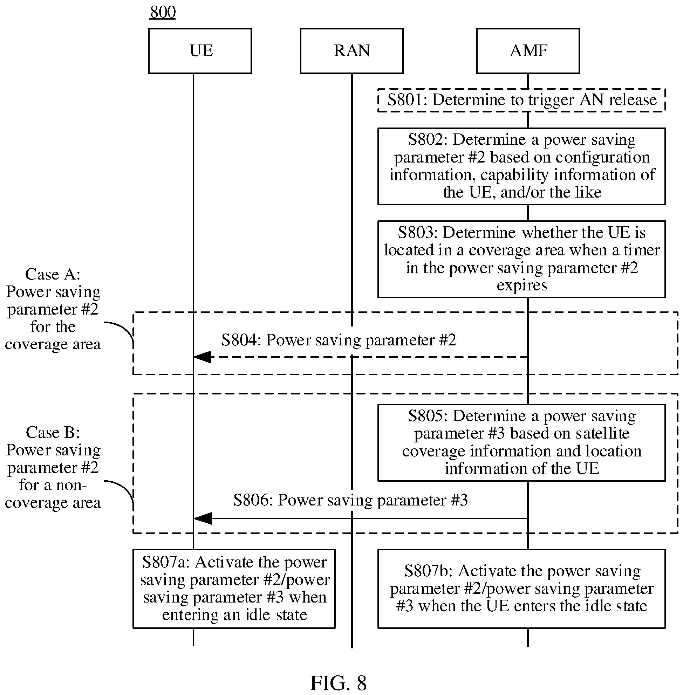

FIG. 8 is an example flowchart of a method 800 according to an embodiment of this application. In the method 800, an AMF properly sets a power saving parameter, so that UE can be located in a coverage area when the power saving parameter expires. Therefore, a power saving feature of the UE in a non-coverage area can be ensured. The following describes the method 800 by using an example with reference to steps in FIG. 8.

Optionally, in S801, the AMF determines to trigger an AN release procedure.

It should be understood that, for S801, refer to the descriptions of the parts S501 to S504 in the method 500. Details are not described herein again.

It should be further understood that S801 is an optional step. S801 may be replaced with that the AMF receives a registration request message from the UE. In other words, the AMF may perform a subsequent solution in this embodiment of this application in a registration procedure (for example, a periodic registration procedure or an initial registration procedure) triggered by the UE. Alternatively, the AMF may perform a subsequent operation on another occasion or in another procedure. This is not limited in this application.

S802: The AMF determines a power saving parameter #2 based on configuration information, capability information of the UE, and/or the like, where the power saving parameter #2 includes active time and/or a periodic registration timer #2, and the power saving parameter #2 is used when the UE enters an idle state.

It should be understood that S802 is similar to S703 in the method 700, and details are not described herein again.

S803: The AMF determines whether the UE is located in a coverage area when a timer in the power saving parameter #2 expires.

It may be understood that, for a mobility management parameter, the AMF determines whether the UE is located in the coverage area when a timer in a mobility management parameter #2 expires.

For example, the AMF determines, based on satellite coverage information and location information of the UE, a duration of the UE in the coverage area, in other words, a duration before the UE leaves the coverage area, or a duration before the UE enters the non-coverage area.

For UE without mobility, namely, UE with a fixed location, location information of the UE includes information about a current location (UE location) of the UE. For UE that moves in a limited area, UE whose moving trajectory is known, or UE whose moving trajectory is predictable, location information of the UE includes information about a current location of the UE and a moving characteristic parameter of the UE (for example, a moving speed, a moving direction, or a moving trajectory of the UE), to determine the duration of the UE in the coverage area.

For example, the AMF determines, based on the satellite coverage information and the location information of the UE, that the duration of the UE in the coverage area is 20 min, which indicates that the UE may be further covered by a satellite for 20 min, indicates that there are 20 min before the UE leaves the coverage area, or indicates that there are 20 min before the UE enters the non-coverage area.

Then, the AMF determines whether the UE is located in the coverage area when the timer in the power saving parameter #2 expires, in other words, the AMF determines whether time corresponding to the timer in the power saving parameter #2 is included in time when the UE is located in the coverage area. For example, time corresponding to the active time and time corresponding to the periodic registration timer #2 in the power saving parameter #2 are respectively 5 min and 10 min, and the duration of the UE in the coverage area is 20 min. Because both 5 min and 10 min are less than 20 min, the AMF determines that the UE is located in the coverage area when the timer in the power saving parameter #2 expires. For another example, time corresponding to the active time and time corresponding to the periodic registration timer #2 in the power saving parameter #2 are respectively 10 min and 30 min, and the duration of the UE in the coverage area is 20 min. Because 30 min is greater than 20 min, the AMF determines that the UE is not located in the coverage area (or is located in the non-coverage area) when the timer in the power saving parameter #2 expires.

For another example, time corresponding to a mobility reachable timer and time corresponding to a deregistration/detach timer in the mobility management parameter #2 are respectively 5 min and 10 min, and the duration of the UE in the coverage area is 20 min. Because both 5 min and 10 min are less than 20 min, the AMF determines that the UE is located in the coverage area when the timer in the mobility management parameter #2 expires. For another example, time corresponding to a mobility reachable timer and time corresponding to a deregistration/detach timer in the mobility management parameter #2 are respectively 10 min and 30 min, and the duration of the UE in the coverage area is 20 min. Because 30 min is greater than 20 min, the AMF determines that the UE is not located in the coverage area (or is located in the non-coverage area) when the timer in the mobility management parameter #2 expires.

When the AMF determines that the UE is located in the coverage area when the timer in the power saving parameter #2 or the mobility management parameter #2 expires, the AMF performs a procedure corresponding to Case A in FIG. 8. When the AMF determines that the UE is not located in the coverage area when the timer in the power saving parameter #2 or the mobility management parameter #2 expires, the AMF performs a procedure corresponding to Case B in FIG. 8. The following respectively describes the procedures corresponding to Case A and Case B by using examples.

### Case A:

S804: The AMF sends the power saving parameter #2 to the UE. Correspondingly, the UE receives the power saving parameter #2 from the AMF.

It should be noted that for the mobility management parameter, S804 does not need to be performed. In other words, S804 is replaced with that the AMF determines that the mobility management parameter is the mobility management parameter #2.

### Case B:

S805: The AMF determines a power saving parameter #3 based on the satellite coverage information and the location information of the UE.

For example, the AMF determines, based on the coverage information and the location information of the UE, a duration of the UE in the non-coverage area and the duration of the UE in the coverage area, and then determines the power saving parameter #3 based on the two durations. The power saving parameter #3 includes active time #3 and a periodic registration timer #3, and the active time #3 is less than or equal to the duration of the UE in the coverage area, a duration corresponding to the periodic registration timer #3 is greater than or equal to a combination of the duration of the UE in the non-coverage area and the duration of the UE in the coverage area. S805 may alternatively be described as: The AMF determines the power saving parameter #3 based on the duration of the UE in the non-coverage area and the duration of the UE in the coverage area.

It should be noted that, for the mobility management parameter, the AMF determines a mobility management parameter #3 based on the duration of the UE in the non-coverage area and the duration of the UE in the coverage area.

S806: The AMF sends the power saving parameter #1 to the UE. Correspondingly, the UE receives the power saving parameter #3 from the AMF.

It should be noted that for the mobility management parameter, S806 does not need to be performed.

S807: The UE activates the power saving parameter #2/power saving parameter #3 when entering the idle state.

For example, if the UE receives the power saving parameter #2, the UE activates the power saving parameter #2 when entering the idle state. If the UE receives the power saving parameter #3, the UE activates the power saving parameter #3 when entering the idle state.

In the solution, the power saving parameter is properly designed, so that the UE does not initiate periodic registration in the coverage area, and when the UE initiates the periodic registration (or when the UE is woken up, or when the periodic registration timer expires), the UE is located in the coverage area of the satellite. In this way, resources of the UE can be saved.

In addition, in the solution, the mobility management parameter is properly designed, so that when the UE is located in the non-coverage area, the UE is not deregistered/detached. In this way, processes such as re-authentication, re-authorization, and UE context re-establishment that are needed for the UE to re-access a network are avoided, thereby saving resources or signalling.

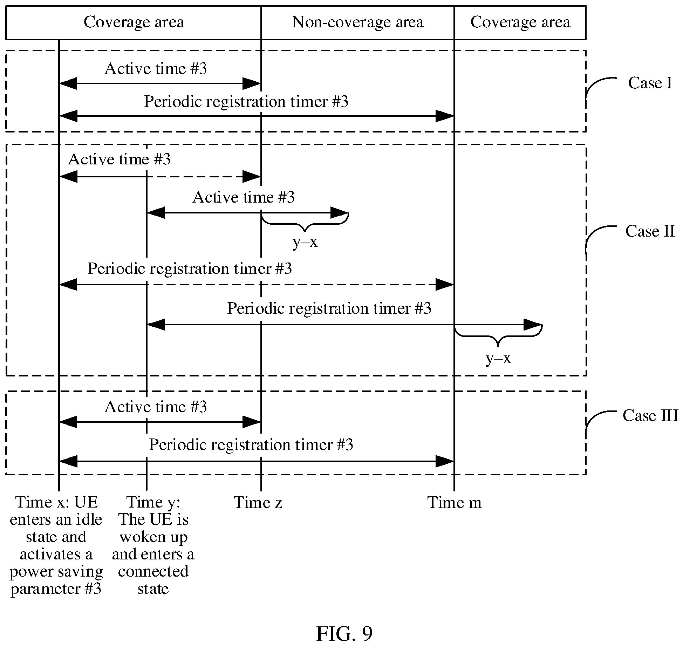

The following describes possible cases in which UE activates a power saving parameter #3 by using an example with reference to FIG. 9.

As shown in FIG. 9, time x is time at which the UE enters an idle state. Therefore, the UE activates the power saving parameter #3 at the time x. In the example shown in FIG. 9, descriptions are provided by using an example in which active time #3 corresponds to a duration of the UE in a coverage area (as shown by an arrow corresponding to the active time #3 in Case I in FIG. 9), and a periodic registration timer #3 corresponds to the duration of the UE in the coverage area and a duration of the UE in a non-coverage area (as shown by an arrow corresponding to the periodic registration timer #3 in Case I in FIG. 9). Therefore, in Case I, when entering the idle state, the UE activates the power saving parameter #3. When the UE enters the non-coverage area from the coverage area, the active time #3 expires. Therefore, in the coverage area, the active time #3 is in a timing phase, and a network side can page the UE. After the UE enters the non-coverage area, the active time #3 expires, and the network side does not page the UE, so that resources are saved. When the UE re-enters the coverage area from the non-coverage area, the periodic registration timer #3 expires. In other words, in the non-coverage area, the periodic registration timer #3 is in a timing phase, and the UE does not initiate a periodic registration procedure, so that resources can be saved.

In Case II, the UE is woken up by a network side and enters a connected state at time y after the UE activates the power saving parameter #3 at the time x. It is assumed that the UE immediately re-enters the idle state after the time y. In this case, the UE and the network side reactivate the power saving parameter #3 after the time y, in other words, reactivate the active time #3 and the periodic registration timer #3. Therefore, in Case II, the active time #3 expires after the UE enters the non-coverage area for time of (y-x). However, within the time of (y-x) after the UE enters the coverage area, the UE is located in the non-coverage area, in other words, in an unreachable state. The network side may page the UE in this time period. As a result, a waste of resources is caused. Similarly, the UE reactivates the periodic registration timer #3 at time y, and the periodic registration timer #3 expires after the UE re-enters the coverage area from the non-coverage area for time of (y-x). However, within the time of (y-x) after the UE re-enters the coverage area, the UE is located in the coverage area. Because the periodic registration timer #3 is still in a timing phase in this time period, on a UE side, the UE considers that the timer does not expire, and does not actively initiate a periodic registration procedure; and on the network side, the network side considers that the UE is still in the unreachable state, and therefore does not page the UE. As a result, communication between the UE and the network side is affected. For example, it is assumed that the UE is located in the coverage area for 10 min, the UE is located in the non-coverage area for 30 min, time x is 1:00, and the time y is 1:05. Therefore, time z is 1:10, and time m is 1:40, the duration corresponding to the active time #3 is 10 min, and the duration corresponding to the periodic registration timer #3 is 40 min. The UE activates the power saving parameter #3 at 1:00, and the active time #3 and the periodic registration timer #3 start timing. After 5 min of timing, in other words, at the time y, after the UE is woken up and enters a connected state, the UE re-enters the idle state. In this case, the UE re-starts timing of the active time #3 and the periodic registration timer. In this case, the active time #3 expires at 1:15, and the periodic registration timer #3 expires at 1:45. Therefore, the UE is located in the non-coverage area when the active time #3 expires, and the UE is located in the coverage area when the periodic registration timer #3 expires.

In view of the problem in Case II, in Case III in FIG. 9, another possible implementation is proposed. In Case III, the UE activates the active time #3 and the periodic registration timer #3 at the time x. After the UE is woken up again at the time y, the UE does not stop timing of the active time #3 and the periodic registration timer #3, but continues the timing previously activated at the time x instead of re-timing after re-entering the connected state. Therefore, in Case III, the UE activates the power saving parameter #3 at the time x. When the UE enters the non-coverage area from the coverage area, the active time #3 expires. Therefore, in the coverage area, the active time #3 is in a timing phase, and the network side can page the UE. After the UE enters the non-coverage area, the active time #3 expires, and the network side does not page the UE, so that resources are saved. When the UE re-enters the coverage area from the non-coverage area, the periodic registration timer #3 expires. Therefore, in the non-coverage area, the periodic registration timer #3 is in a timing phase, and the UE does not initiate a periodic registration procedure, so that resources can be saved.

It may be understood that the mechanism may be activated by the UE. Specifically, when determining that the UE accesses a network through discontinuous coverage via a satellite, the UE activates the mechanism, to be specific, after the UE re-enters the connected state from the idle state, the UE continues timing of the periodic registration timer #3 instead of re-timing. The UE may determine, based on ephemeris information, whether the UE accesses the network through discontinuous coverage via the satellite.

It may be understood that the mechanism may alternatively be activated by the AMF. When the AMF determines that the UE accesses the network through discontinuous coverage via the satellite, the mechanism is used. Specifically, the AMF sends third indication information to the UE, to indicate the UE to continue timing of the periodic registration timer #3 after the UE enters the connected state from the idle state. The third indication information may alternatively be described as indicating that the UE accesses the network through discontinuous coverage via the satellite, so that the UE activates the mechanism.

It should be noted that a new registration timer type may be further defined. When the UE receives a registration timer of the type, the UE continues timing of the registration timer instead of re-timing when the UE enters the connected state from the idle state.

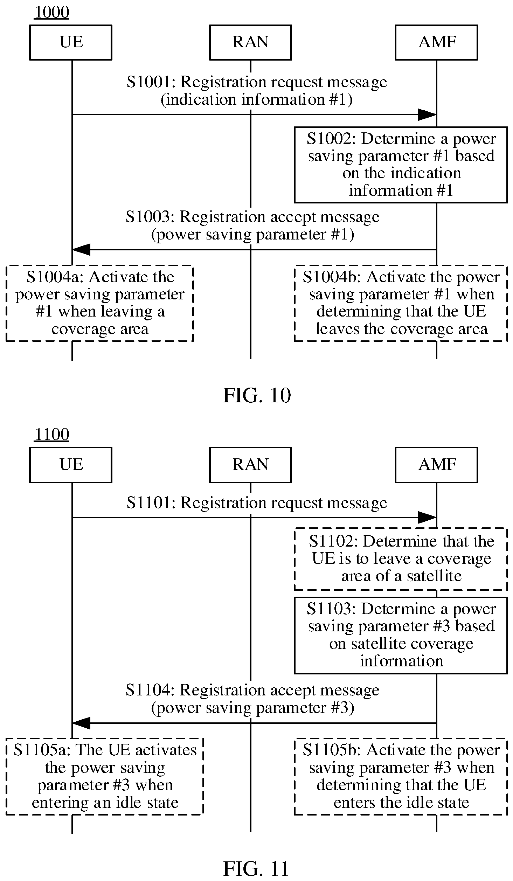

FIG. 10 is an example flowchart of a method 1000 according to an embodiment of this application. In the method 1000, UE sends, to an AMF, indication information indicating that the UE supports a power saving parameter #1, so that the AMF properly determines whether to activate the power saving parameter when the UE leaves a coverage area of a satellite, to avoid meaningless activation of the power saving parameter. The following describes the method 1000 by using an example with reference to steps in FIG. 10.

S1001: The UE sends a registration request (Registration request) message to the AMF. Correspondingly, the AMF receives the registration request message from the UE.

For example, the UE sends the registration request message to the AMF via a RAN, to trigger a registration procedure. The registration request message includes indication information #1, the indication information #1 indicates that the UE supports activation of the power saving parameter when leaving the coverage area of the satellite, and the power saving parameter includes a periodic registration timer. In an example, the power saving parameter indicates a duration after which the UE initiates periodic connection establishment to the AMF, and the duration is greater than or equal to a duration of the UE in a non-coverage area of the satellite. The periodic connection establishment may be periodic registration, or may be a periodic tracking area update. The indication information #1 may alternatively be described as: The indication information #1 indicates that the UE supports activation of the power saving parameter when entering the non-coverage area of the satellite; or the indication information #1 indicates that the UE supports determining, based on a satellite coverage status, whether to activate the power saving parameter; or the indication information #1 indicates that the UE supports a future power saving parameter (future power saving parameter). That the UE supports the future power saving parameter means that the UE supports activation of the power saving parameter when a preset condition is met, or that the UE supports activation of the power saving parameter at a specific moment in the future. In other words, the future power saving parameter is a power saving parameter activated and used by the UE when a preset condition is met or at a specific moment in the future. It may be further understood that the power saving parameter herein may be any information for power saving, for example, may be a periodic registration timer or active time. Therefore, the power saving parameter in this embodiment of this application may be replaced with a specific parameter, for example, the periodic registration timer. In other words, in an example, the indication information #1 may alternatively be described as: The indication information #1 indicates that the UE supports activation of the periodic registration timer when leaving the coverage area of the satellite. The periodic registration timer herein may be a power saving parameter #1 determined by the AMF based on the indication information #1 in S1002.

S 1001 is described by using an example in which the UE sends the indication information #1 to the AMF in the registration procedure. However, it may be understood that the UE may alternatively send the indication information #1 to the AMF in another procedure (or by using another message). For example, the UE sends the indication information #1 to the AMF by using a newly added NAS message.

S1002: The AMF determines the power saving parameter #1 based on the indication information #1.

For example, after receiving the registration request message from the UE, the AMF determines the power saving parameter #1 based on the indication information #1 carried in the registration request message. For example, the power saving parameter #1 is a periodic registration timer. The power saving parameter #1 is for activation and use by the UE and the AMF when the UE leaves the coverage area of the satellite. In other words, the power saving parameter #1 is a future power saving parameter. Specifically, the AMF determines, based on the indication information #1, that the UE supports activation of the power saving parameter when leaving the coverage area of the satellite (in other words, the UE supports the future power saving parameter). In this case, optionally, the AMF may further determine, based on subscription data and/or policy information of the UE, whether a network side allows/enables sending of the power saving parameter #1 to the UE. When the network side allows/enables the sending, the AMF activates a future power saving parameter mechanism (in other words, the AMF determines the future power saving parameter, namely, the power saving parameter #1). It may be understood that the AMF may obtain the subscription data of the UE from a UDM, and obtain the policy information of the UE from a PCF. A specific manner is not limited in this application.

S1003: The AMF sends a registration accept message to the UE, where the registration accept message includes the power saving parameter #1. Correspondingly, the UE receives the registration accept message from the AMF.

Optionally, Case 1 further includes the following steps:
S 1004a: The UE activates the power saving parameter #1 when leaving the coverage area.
S1004b: The AMF activates the power saving parameter #1 when determining that the UE leaves the coverage area of the satellite.
S 1004a and S 1004b are similar to S706a and S706b in the method 700. For brevity, details are not described herein again.

In the solution, the AMF determines, depending on whether the UE supports activation of the power saving parameter when leaving satellite coverage and the subscription data/policy, whether to activate the power saving parameter #1, to avoid the meaningless activation of the power saving parameter #1.

FIG. 11 is a schematic flowchart of a method 1100 according to an embodiment of this application. In the method 1100, when UE does not support activation of a power saving parameter when leaving a coverage area of a satellite, the UE may send a registration request message to an AMF when the UE is to leave the coverage area of the satellite. When determining that the UE is to leave the coverage area of the satellite, the AMF generates a power saving parameter #3 for the UE.

S1101: The UE sends the registration request message to the AMF. Correspondingly, the AMF receives the registration request message from the UE.

In a possible implementation, the UE may send the registration request message to the AMF when the UE is to leave the coverage area of the satellite. The registration request message herein may be an initial registration request message, or may be a periodic registration request message. This is not limited in this application. The UE may determine, based on location information of the UE and ephemeris information, whether the UE is to leave the coverage area of the satellite. For example, when the UE determines, based on the location information of the UE and the ephemeris information, that a distance between the UE and a boundary of the coverage area of the satellite is less than a first threshold (for example, 1 m), the UE considers that the UE is to leave the coverage area of the satellite. For another example, when the UE determines, based on the location information of the UE and the ephemeris information, that time before the UE leaves a boundary of the coverage area of the satellite is less than a second threshold (for example, 1 min), the UE considers that the UE is to leave the coverage area of the satellite.

Optionally, the registration request message may alternatively carry indication information #2, and the indication information #2 indicates that the UE is to leave the coverage area of the satellite. It may be understood that the registration request message in this case is a registration request message of a new type, in other words, the registration request message may correspond to a registration procedure of a new type. When the UE is to leave the coverage area of the satellite, the UE sends a registration request message of this new type to the AMF. In other words, the registration request message of this new type indicates that the UE is to leave the coverage area of the satellite.

Optionally, when the UE does not support activation of the power saving parameter when leaving the coverage area of the satellite, the UE may send the registration request message to the AMF when the UE is to leave the coverage area of the satellite. For example, the UE may determine, based on local configuration information, whether to support activation of the power saving parameter when leaving the coverage area of the satellite. For example, the local configuration information of the UE indicates that the UE does not support activation of the power saving parameter when leaving the coverage area of the satellite. For another example, when the UE cannot identify a power saving parameter from a network side, the UE determines that the UE does not support activation of the power saving parameter when leaving the coverage area of the satellite. Optionally, in this case, the UE may send indication information #3 to the AMF, where the indication information #3 indicates that the UE does not support activation of the power saving parameter when leaving the coverage area of the satellite. The UE may send the indication information #3 to the AMF in an initial registration procedure, or may send the indication information #3 in another procedure. This is not limited in this application. It may be understood that, in this implementation, the UE may first determine whether to support activation of the power saving parameter when leaving the coverage area of the satellite, and then determine whether the UE is to leave the coverage area of the satellite. In this case, before determining whether the UE is to leave the coverage area of the satellite, the UE may determine that the UE does not support activation the power saving parameter when leaving the coverage area of the satellite. Alternatively, the UE may first determine whether the UE is to leave the coverage area of the satellite, and then determine whether to support activation of the power saving parameter when leaving the coverage area of the satellite. This is not limited in this application.

Optionally, in S1102, the AMF determines that the UE is to leave the coverage area of the satellite.

In an implementation, when the AMF receives the indication information #2 and/or the indication information #3 from the UE, the AMF determines that the UE is to leave the coverage area of the satellite.

In another implementation, when the AMF receives no indication information #2 and/or no indication information #3 from the UE, the AMF determines that the UE is to leave the coverage area of the satellite.

In another implementation, the AMF may alternatively determine, based on the location information of the UE and the ephemeris information, that the UE is to leave the coverage area of the satellite. For example, when the AMF determines, based on the location information of the UE and the ephemeris information, that the distance between the UE and the boundary of the coverage area of the satellite is less than the first threshold (for example, 1 m), the AMF determines that the UE is to leave the coverage area of the satellite. For another example, when the AMF determines, based on the location information of the UE and the ephemeris information, that the time before the UE leaves the boundary of the coverage area of the satellite is less than the second threshold (for example, 1 min), the AMF determines that the UE is to leave the coverage area of the satellite.

It may be understood that the AMF may alternatively determine, through any one of the three implementations, that the UE does not support activation of the power saving parameter when leaving the coverage area of the satellite. For example, when receiving the indication information #2 and/or the indication information #3 from the UE, the AMF determines that the UE does not support activation of the power saving parameter when leaving the coverage area of the satellite.

S 1103: The AMF determines the power saving parameter #3 based on satellite coverage information.

For example, when determining that the UE is to leave the coverage area of the satellite, the AMF determines the power saving parameter #3 based on the satellite coverage information. Alternatively, when determining that the UE is to leave the coverage area of the satellite, and the UE does not support activation of the power saving parameter when leaving the coverage area of the satellite, the AMF determines the power saving parameter #3 based on the satellite coverage information.

S 1104: The AMF sends a registration accept message to the UE, where the registration accept message includes the power saving parameter #3. Correspondingly, the UE receives the power saving parameter #3 from the AMF.

Optionally, the method 1100 may further include the following steps:
S1105a: The UE activates the power saving parameter #3 when entering an idle state.
S 1105b: The AMF activates the power saving parameter #3 when determining that the UE enters the idle state.

The solution is described by using an example in which the AMF generates the power saving parameter #3 for the UE in the registration procedure of the UE. However, it may be understood that the AMF may alternatively generate the power saving parameter #3 for the UE in another procedure, for example, an AN release procedure. The following describes this case by using examples.

In a possible implementation, the AMF may generate the power saving parameter for the UE before triggering the AN release procedure. For example, due to a reason such as an unknown error, the AMF determines to initiate the AN release procedure of the UE. Before sending a UE context command message to a RAN, the AMF sends the power saving parameter #3 to the UE. It may be understood that, in this implementation, the UE may generate the power saving parameter #3 after determining to initiate the AN release procedure, or may pre-generate the power saving parameter #3 on another occasion (for example, in the registration procedure of the UE). This is not limited in this application.

In another possible implementation, the AMF may generate the power saving parameter #3 for the UE after triggering of the AN release procedure and before release of an access network of the UE. For example, due to reasons such as user inactivity and NMS interference, a RAN initiates the AN release procedure to the AMF. Specifically, the RAN sends a UE context release request message to the AMF. After receiving the UE context release request message from the RAN, and before sending a UE context release command to the RAN, the AMF sends the power saving parameter #3 to the UE.

Correspondingly, the UE receives the power saving parameter #3 from the AMF. The power saving parameter #3 may be carried in a NAS message sent by the AMF to the UE, for example, a UE configuration update command or a downlink NAS transmission message.

The two solutions are described by using an example in which the AMF generates the power saving parameter #3 for the UE in the registration procedure of the UE or the another procedure, and provides the power saving parameter #3 for the UE. It may be understood that the AMF may alternatively generate the power saving parameter #3, but does not send the power saving parameter #3 to the UE. The following describes this case by using an example.

In a possible implementation, when determining that the UE is to leave the coverage area of the satellite, or when determining that the UE does not support activation of the power saving parameter when leaving the coverage area of the satellite, the AMF generates the power saving parameter #3. The power saving parameter #3 may be a deregistration timer. For example, the AMF determines the deregistration timer based on a duration of the UE in a non-coverage area of the satellite, where a duration indicated by the deregistration timer is greater than or equal to the duration of the UE in the non-coverage area of the satellite. The AMF may activate a mobile reachable timer when a NAS connection of the UE is released, and activate the deregistration timer after the mobile reachable timer expires. Alternatively, the AMF activates the deregistration timer when determining that the UE enters the non-coverage area of the satellite. During timing of the deregistration timer, the AMF retains a context of the UE (in other words, does not deregister the UE), to ensure that the AMF does not deregister the UE when the UE is located in the non-coverage area of the satellite.

For a method for determining, by the AMF, that the UE is to leave the coverage area of the satellite and a method for determining, by the AMF, that the UE does not support activation of the power saving parameter when leaving the coverage area of the satellite, refer to the descriptions of the parts S1101 and S 1102 in the method 1100. Details are not described herein again.

In the solution, in the registration procedure initiated by the UE, the AMF generates the power saving parameter #3 for the UE when determining that the UE is to leave the coverage area of the satellite, to ensure power saving of the UE when the UE is located in the non-coverage area of the satellite.

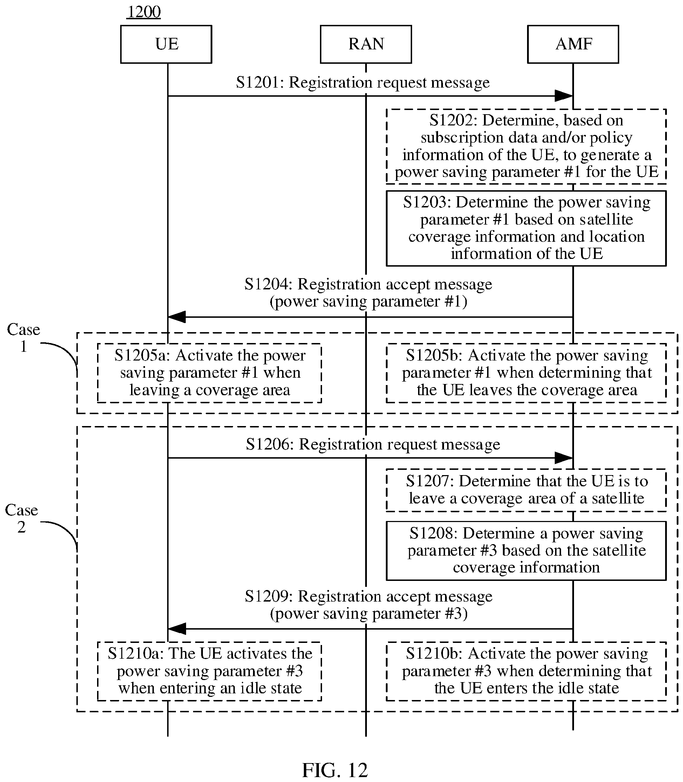

FIG. 12 is an example flowchart of a method 1200 according to an embodiment of this application. In the method 1200, in a registration procedure initiated by UE, an AMF determines, depending on whether the UE is to leave a coverage area of a satellite, whether to update a power saving parameter of the UE, to ensure a power saving feature of the UE in a non-coverage area. The following describes the method 1200 by using an example with reference to steps in FIG. 12.

S1201: The UE sends a registration request (Registration request) message to the AMF. Correspondingly, the AMF receives the registration request message from the UE. Optionally, in S1202, the AMF determines, based on subscription data and/or policy information of the UE, to generate a power saving parameter #1 for the UE.

Optionally, when the AMF receives, from the UE, no indication information (for example, the indication information #2 in the method 1100) indicating that the UE is to leave the coverage area of the satellite, or when the AMF receives, from the UE, no indication information (for example, the indication information #3 in the method 1100) indicating that the UE does not support activation of the power saving parameter when leaving the coverage area of the satellite, the AMF may consider that the UE supports activation of the power saving parameter when leaving the coverage area of the satellite, in other words, the AMF generates the power saving parameter #1 for the UE by default. Further, the AMF may determine, based on the subscription data and/or policy information of the UE, whether a network side allows/enables sending of the power saving parameter #1 to the UE. The power saving parameter #1 is for activation and use by the UE and the AMF when the UE leaves the coverage area of the satellite. When the network side allows/enables the sending, the AMF performs S 1203.

S1203: The AMF determines the power saving parameter #1 based on satellite coverage information and location information of the UE. A specific process is similar to S702 in the method 700, and details are not described herein again.

S1204: The AMF sends a registration accept message to the UE, where the registration accept message includes the power saving parameter #1. Correspondingly, the UE receives the registration accept message from the AMF.

After the UE receives the registration accept message from the AMF, a subsequent solution is further performed depending on whether the UE supports activation of the power saving parameter #1 when leaving the coverage area of the satellite. The following respectively describes two cases by using examples.

Case 1: The UE supports activation of the power saving parameter #1 when leaving the coverage area of the satellite.

S1205a: The UE activates the power saving parameter #1 when leaving the coverage area.

For example, when the UE supports activation of the power saving parameter #1 when leaving the coverage area of the satellite, the UE stores (or maintains) the power saving parameter #1, and activates the power saving parameter #1 when leaving the coverage area of the satellite.

S1205b: The AMF activates the power saving parameter #1 when determining that the UE leaves the coverage area. For example, the AMF stores the power saving parameter #1 after determining the power saving parameter #1. When the UE does not re-initiate a registration procedure to the AMF, in other words, the AMF does not determine a new power saving parameter for the UE, the AMF activates the power saving parameter #1 when determining that the UE leaves the coverage area of the satellite.

Case 2: The UE does not support activation of the power saving parameter #1 when leaving the coverage area of the satellite.

It may be understood that Case 2 may correspond to the solution in the method 1100, and S1206 to S1210 are similar to S1101 to S1105 in the method 1100. For brevity, details are not described herein again.

In the solution, in the registration procedure initiated by the UE, when determining that the UE is to leave the coverage area of the satellite, the AMF updates the power saving parameter of the UE, to ensure that when the UE does not support starting the power saving parameter #1 when leaving satellite coverage, the AMF may update the power saving parameter of the UE in a timely manner based on the satellite coverage information, so as to ensure a power saving effect of the UE in the non-coverage area of the satellite.

Corresponding to the methods provided in the foregoing method embodiments, embodiments of this application further provides corresponding apparatuses. The apparatuses include corresponding modules configured to perform the foregoing method embodiments. The module may be software, hardware, or a combination of software and hardware. It may be understood that technical features described in the foregoing method embodiments are also applicable to the following apparatus embodiments. Therefore, for content that is not described in detail, refer to the foregoing method embodiments. For brevity, details are not described herein again.

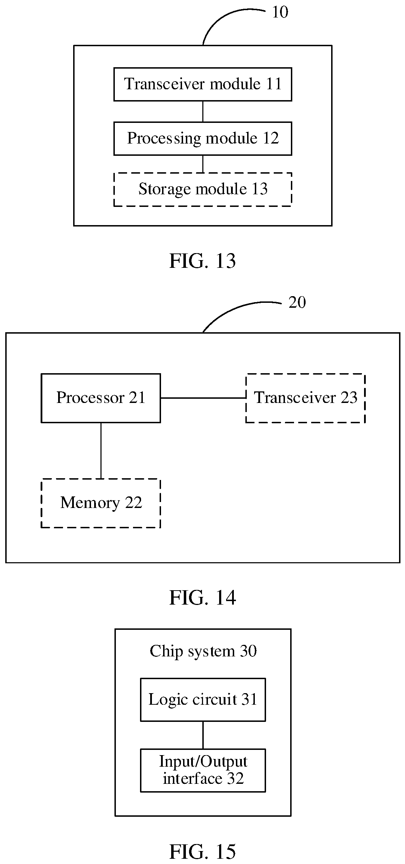

FIG. 13 is a block diagram of a communication apparatus 10 according to an embodiment of this application. The apparatus 10 includes a transceiver module 11 and a processing module 12. The transceiver module 11 may implement a corresponding communication function. The processing module 12 is configured to perform data processing. In other words, the transceiver module 11 is configured to perform receiving and sending related operations. The processing module 12 is configured to perform operations other than the receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement actions of a device or a network element in the foregoing method embodiments.

In a first design, the apparatus 10 may correspond to the terminal device (for example, the terminal device in the method 600 and the method 610, or the AMF in the method 700, the method 800, and the method 1000 to the method 1200) in the foregoing method embodiments, or a component (for example, a chip) of a mobility management network element.

The apparatus 10 may implement corresponding steps or procedures performed by the terminal device in the foregoing method embodiments. The transceiver module 11 may be configured to perform receiving and sending related operations of the terminal device in the foregoing method embodiments. The processing module 12 may be configured to perform processing related operations of the terminal device in the foregoing method embodiments.

In a possible implementation, the apparatus 10 may implement steps or procedures performed by the terminal device in the method 1000 to the method 1200 in the foregoing method embodiments. The transceiver module 11 is configured to receive a first timer from a network device, where the first timer indicates a first duration after which the terminal device initiates periodic connection establishment to the network device, and the first duration is greater than or equal to a duration of the terminal device in a non-coverage area of a satellite. The processing module 12 is configured to activate the first timer when the terminal device determines that the terminal device leaves the coverage area of the satellite.

In another possible implementation, the apparatus 10 may implement steps or procedures performed by the terminal device in the method 1000 to the method 1200 in the foregoing method embodiments. The processing module 12 is configured to send a registration request message to a network device via the transceiver module 11 when the terminal device determines that the terminal device is to leave a coverage area of a satellite. The transceiver module 11 is further configured to receive a registration accept message from the network device, where the registration accept message includes a third timer, the third timer indicates a third duration after which the terminal device initiates periodic connection establishment to the network device, and the third duration is greater than or equal to a duration of the terminal device in a non-coverage area of the satellite. The processing module 12 is further configured to activate the third timer when the terminal device enters an idle state.

In a second design, the apparatus 10 may correspond to the network device (for example, the network device in the method 600 and the method 610, or the AMF in the method 700, the method 800, and the method 1000 to the method 1200) in the foregoing method embodiments, or a component (for example, a chip) of the network device.

The apparatus 10 may implement corresponding steps or procedures performed by the network device in the foregoing method embodiments. The transceiver module 11 may be configured to perform receiving and sending related operations of the network device in the foregoing method embodiments. The processing module 12 may be configured to perform processing related operations of the network device in the foregoing method embodiments.

In a possible implementation, the apparatus 10 may implement steps or procedures performed by the network device in the method 700 and the method 800 in the foregoing method embodiments. The processing module 12 is configured to determine a first timer based on a duration of a terminal device in a non-coverage area of a satellite, where the first timer indicates a first duration after which the terminal device initiates periodic connection establishment to the network device, and the first duration is greater than or equal to the duration of the terminal device in the non-coverage area of the satellite. The transceiver module 11 is configured to send the first timer to the terminal device, and indicate the terminal device to activate the first timer when the terminal device leaves a coverage area of the satellite.

In another possible implementation, the apparatus 10 may implement steps or procedures performed by the network device in the method 1000 to the method 1200 in the foregoing method embodiments. The processing module 12 is configured to determine a first timer based on a duration of a terminal device in a coverage area of a satellite and a duration of the terminal device in a non-coverage area of the satellite, where the first timer indicates a first duration after which the terminal device initiates periodic connection establishment to the network device, and the first duration is greater than or equal to a combination of the duration of the terminal device in the coverage area of the satellite and the duration of the terminal device in the non-coverage area of the satellite. The transceiver module 11 is configured to send the first timer to the terminal device.

In another possible implementation, the apparatus 10 may implement steps or procedures performed by the network device in the method 1000 to the method 1200 in the foregoing method embodiments. The processing module 12 is configured to determine a third timer based on a duration of a terminal device in a non-coverage area of a satellite when the network device determines that the terminal device is to leave a coverage area of the satellite, where the third timer indicates a third duration after which the terminal device initiates periodic connection establishment to the network device, and the third duration is greater than or equal to the duration of the terminal device in the non-coverage area of the satellite. The transceiver module 11 is configured to send the third timer to the terminal device.

In another possible implementation, the apparatus 10 may implement steps or procedures performed by the terminal device in the method 1000 to the method 1200 in the foregoing method embodiments. The processing module 12 is configured to determine a fourth timer based on a duration of the terminal device in a non-coverage area of a satellite when the network device determines that the terminal device is to leave a coverage area of the satellite, where the fourth timer indicates a fourth duration after which the network device deregisters the terminal device. The processing module 12 is further configured to activate a mobile reachable timer when a non-access stratum connection of the terminal device is released, and activate the fourth timer when the mobile reachable timer expires.

It should be understood that specific processes in which the modules perform the foregoing corresponding steps are described in detail in the foregoing method embodiments. For brevity, details are not described herein again.

It should be further understood that the apparatus 10 herein is presented in a form of a functional module. The term "module" herein may be an application-specific integrated circuit (application-specific integrated circuit, ASIC), an electronic circuit, a processor (such as a shared processor, a dedicated processor, or a group processor) configured to execute one or more software or firmware programs, a memory, a combinational logic circuit, and/or another suitable component that supports the described function. In an optional example, a person skilled in the art may understand that the apparatus 10 may be specifically the network device in the foregoing embodiments, and may be configured to perform the procedures and/or steps corresponding to the network device in the foregoing method embodiments. Alternatively, the apparatus 10 may be specifically the terminal device in the foregoing embodiments, and may be configured to perform the procedures and/or steps corresponding to the terminal device in the foregoing method embodiments. To avoid repetition, details are not described herein again.

The apparatus 10 in each of the solutions has a function of implementing corresponding steps performed by a device (such as the network device or the terminal device) in the foregoing method. The function may be implemented by hardware, or may be implemented by hardware executing corresponding software. The hardware or the software includes one or more modules corresponding to the function. For example, a transceiver module may be replaced with a transceiver machine (for example, a sending unit in the transceiver module may be replaced with a sending machine, and a receiving unit in the transceiver module may be replaced with a receiving machine), and another unit such as a processing module may be replaced with a processor, to respectively perform sending and receiving operations and processing related operations in the method embodiments.

In addition, the transceiver module 11 may alternatively be a transceiver circuit (for example, may include a receiving circuit and a sending circuit), and the processing module may be a processing circuit.

FIG. 14 is a diagram of another communication apparatus 20 according to an embodiment of this application. The apparatus 20 includes a processor 21. The processor 21 is configured to execute a computer program or instructions stored in a memory 22, or read data/signalling stored in the memory 22, to perform the methods in the foregoing method embodiments. Optionally, there are one or more processors 21.

Optionally, as shown in FIG. 14, the apparatus 20 further includes the memory 22, and the memory 22 is configured to store the computer program or the instructions and/or the data. The memory 22 may be integrated with the processor 21, or may be disposed separately. Optionally, there are one or more memories 22.

Optionally, as shown in FIG. 14, the apparatus 20 further includes a transceiver 23. The transceiver 23 is configured to receive and/or send a signal. For example, the processor 21 is configured to control the transceiver 23 to receive and/or send the signal.

In a solution, the apparatus 20 is configured to implement operations performed by the network device in the foregoing method embodiments.

For example, the processor 21 is configured to execute the computer program or the instructions stored in the memory 22, to implement related operations of the network device in the foregoing method embodiments. For example, the processor 21 executes the computer program or the instructions stored in the memory 22, to implement the methods performed by the network device in FIG. 6(a) and FIG. 6(b), or to indicate the methods performed by the AMF in FIG. 7 and FIG. 8 and FIG. 10 to FIG. 12.

In another solution, the apparatus 20 is configured to implement operations performed by the terminal device in the foregoing method embodiments.

For example, the processor 21 is configured to execute the computer program or the instructions stored in the memory 22, to implement related operations of the terminal device in the foregoing method embodiments. For example, the processor 21 executes the computer program or the instructions stored in the memory 22, to implement the methods performed by the terminal device in FIG. 6(a) and FIG. 6(b), or to indicate the methods performed by the UE in FIG. 7 and FIG. 8 and FIG. 10 to FIG. 12.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is the general-purpose processor, the DSP, the ASIC, the FPGA or the another programmable logic device, the discrete gate or the transistor logic device, or the discrete hardware component, the memory (storage module) may be integrated into the processor.

It should be further noted that the memory described in this specification is intended to include but is not limited to these memories and any memory of another appropriate type.

FIG. 15 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signalling information to the chip system 30 for processing.

In another solution, the chip system 30 is configured to implement operations performed by the network device (the network device in FIG. 6(a) and FIG. 6(b), or the AMF in FIG. 7, FIG. 8, and FIG. 10 to FIG. 12) in the foregoing method embodiments.

In another solution, the chip system 30 is configured to implement operations performed by the terminal device (the terminal device in FIG. 6(a) and FIG. 6(b), or the UE in FIG. 7, FIG. 8, and FIG. 10 to FIG. 12) in the foregoing method embodiments.

An embodiment of this application further provides a computer-readable storage medium. The computer-readable storage medium stores computer instructions for implementing the methods performed by a device in the foregoing method embodiments.

For example, when a computer program is executed by a computer, the computer is enabled to implement the methods performed by the mobility management network element in the foregoing method embodiments.

For another example, when a computer program is executed by a computer, the computer is enabled to implement the methods performed by the terminal device in the foregoing method embodiments.

An embodiment of this application further provides a computer program product, including instructions. When the instructions are executed by a computer, the methods performed by a device (for example, the mobility management network element or the terminal device) in the foregoing method embodiments are implemented.

An embodiment of this application further provides a communication system, including the foregoing mobility management network element and session management network element. Optionally, the system further includes a device that communicates with the foregoing remote terminal device and/or relay terminal device.

For explanations and beneficial effects of related content of any one of the apparatuses provided above, refer to a corresponding method embodiment provided above. Details are not described herein again.

In several embodiments provided in this application, it should be understood that the disclosed apparatuses and methods may be implemented in other manners. For example, the apparatus embodiments described above are merely examples. For example, division into the units is merely logical function division and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electrical form, a mechanical form, or another form.

All or a part of the foregoing embodiments may be implemented by using software, hardware, firmware, or any combination thereof. When the software is for implementing the embodiments, all or a part of the embodiments may be implemented in a form of a computer program product. The computer program product includes one or more computer instructions. When the computer program instructions are loaded and executed on a computer, all or a part of the procedures or functions according to embodiments of this application are generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like. For example, the usable medium includes but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, a first timer from a network device, wherein the first timer indicates a first duration after which the terminal device initiates periodic connection establishment to the network device, and the first duration is greater than or equal to a duration of the terminal device in a non-coverage area of a satellite; and
activating, by the terminal device, the first timer when the terminal device determines that the terminal device leaves a coverage area of the satellite.

2. The method according to claim 1, wherein the method further comprises:
receiving, by the terminal device, a second timer from the network device, wherein the second timer indicates a second duration after which the terminal device initiates periodic connection establishment to the network device; and
activating, by the terminal device, the second timer when the terminal device enters an idle state and determines that the terminal device is located in the coverage area of the satellite.

3. The method according to claim 2, wherein the method further comprises:
stopping, by the terminal device, the second timer when the terminal device leaves the coverage area of the satellite.

4. The method according to any one of claims 1 to 3, wherein the method further comprises:
sending, by the terminal device, a registration request message or a tracking area update request message to the network device after the first timer expires.

5. The method according to any one of claims 1 to 4, wherein before the activating, by the terminal device, the first timer, the method further comprises:
determining, by the terminal device based on ephemeris information of the satellite, that the terminal device leaves the coverage area of the satellite.

6. The method according to any one of claims 1 to 5, wherein before the receiving, by a terminal device, a first timer from a network device, the method further comprises:
sending, by the terminal device, first indication information to the network device, wherein the first indication information indicates that the terminal device supports activation of a power saving parameter when leaving the coverage area of the satellite, and the power saving parameter comprises a periodic registration timer.

7. A communication method, comprising:
sending, by a terminal device, a registration request message to a network device when determining that the terminal device is to leave a coverage area of a satellite;
receiving, by the terminal device, a registration accept message from the network device, wherein the registration accept message comprises a third timer, the third timer indicates a third duration after which the terminal device initiates periodic connection establishment to the network device, and the third duration is greater than or equal to a duration of the terminal device in a non-coverage area of the satellite; and
activating, by the terminal device, the third timer when the terminal device enters an idle state.

8. The method according to claim 7, wherein the method further comprises:
determining, by the terminal device, that the terminal device is to leave the coverage area of the satellite, wherein the determining, by the terminal device, that the terminal device is to leave the coverage area of the satellite specifically comprises:
determining, by the terminal device, that a distance between a location of the terminal device and a boundary of the coverage area of the satellite is less than a first threshold; or
determining, by the terminal device, a case in which time before the terminal device leaves the coverage area of the satellite is less than a second threshold.

9. The method according to claim 7 or 8, wherein the registration request message comprises second indication information, and the second indication information indicates that the terminal device is to leave the coverage area of the satellite.

10. The method according to any one of claims 7 to 9, wherein the sending, by a terminal device, a registration request message to a network device when determining that the terminal device is to leave a coverage area of a satellite comprises:
sending, by the terminal device, the registration request message to the network device when determining that the terminal device is to leave the coverage area of the satellite and does not support activation of a power saving parameter when leaving the coverage area of the satellite.

11. A communication method, comprising:
determining, by a network device, a first timer based on a duration of a terminal device in a non-coverage area of a satellite, wherein the first timer indicates a first duration after which the terminal device initiates periodic connection establishment to the network device, and the first duration is greater than or equal to the duration of the terminal device in the non-coverage area of the satellite; and
sending, by the network device, the first timer to the terminal device, and indicating the terminal device to activate the first timer when the terminal device leaves the coverage area of the satellite.

12. The method according to claim 11, wherein the method further comprises:
activating, by the network device, the first timer when the network device determines that the terminal device leaves the coverage area of the satellite.

13. The method according to claim 11 or 12, wherein the method further comprises:
determining, by the network device, the duration of the terminal device in the non-coverage area of the satellite.

14. The method according to claim 13, wherein the determining, by the network device, the duration of the terminal device in the non-coverage area of the satellite comprises:
determining, by the network device, the duration of the terminal device in the non-coverage area of the satellite based on satellite coverage information and location information of the terminal device.

15. The method according to any one of claims 11 to 14, wherein the sending, by the network device, the first timer to the terminal device comprises:
sending, by the network device, a message to the terminal device, wherein the message comprises a second timer and the first timer, and the second timer indicates a second duration after which the terminal device initiates periodic connection establishment to the network device.

16. The method according to claim 15, wherein the method further comprises:
indicating, by the network device, the terminal device to activate the second timer when the terminal device enters an idle state and the terminal device is located in the coverage area of the satellite.

17. The method according to any one of claims 11 to 16, wherein the method further comprises:
receiving, by the network device, first indication information from the terminal device, wherein the first indication information indicates that the terminal device supports activation of a power saving parameter when leaving the coverage area of the satellite, and the power saving parameter comprises a periodic registration timer; and
determining, by the network device, the first timer based on the first indication information.

18. A communication method, comprising:
determining, by a network device, a first timer based on a duration of a terminal device in a coverage area of a satellite and a duration of the terminal device in a non-coverage area of the satellite, wherein the first timer indicates a first duration after which the terminal device initiates periodic connection establishment to the network device, and the first duration is greater than or equal to a combination of the duration of the terminal device in the coverage area of the satellite and the duration of the terminal device in the non-coverage area of the satellite; and
sending, by the network device, the first timer to the terminal device.

19. The method according to claim 18, wherein the determining, by a network device, a first timer based on a duration of a terminal device in a coverage area of a satellite and a duration of the terminal device in a non-coverage area of the satellite comprises:
determining, by the network device, a second timer, wherein the second timer indicates a second duration after which the terminal device initiates periodic connection establishment to the network device; and
determining, by the network device, the first timer based on the duration of the terminal device in the coverage area of the satellite and the duration of the terminal device in the non-coverage area of the satellite when the network device determines that the terminal device is located in the non-coverage area of the satellite when the second timer expires.

20. The method according to claim 18 or 19, wherein the method further comprises:
activating, by the network device, the first timer when the terminal device enters an idle state; and
continuing, by the network device, timing of the first timer when the terminal device enters a connected state from the idle state and the first timer does not expire.

21. The method according to any one of claims 18 to 20, wherein the method further comprises:
determining, by the network device, the duration of the terminal device in the coverage area of the satellite and the duration of the terminal device in the non-coverage area of the satellite.

22. The method according to claim 21, wherein the determining, by the network device, the duration of the terminal device in the coverage area of the satellite and the duration of the terminal device in the non-coverage area of the satellite comprises:
determining, by the network device, the duration of the terminal device in the coverage area of the satellite and the duration of the terminal device in the non-coverage area of the satellite based on satellite coverage information and location information of the terminal device.

23. A communication apparatus, wherein the apparatus comprises one or more functional modules, and the one or more functional modules are configured to perform the method according to any one of claims 1 to 6, configured to perform the method according to any one of claims 1 to 4, or configured to perform the method according to any one of claims 5 to 10.

24. A communication apparatus, comprising:
a processor, configured to execute a computer program stored in a memory, to enable the apparatus to perform the method according to any one of claims 1 to 6, enable the apparatus to perform the method according to any one of claims 11 to 17, or enable the apparatus to perform the method according to any one of claims 18 to 22.

25. A computer program product, wherein the computer program product comprises instructions for performing the method according to any one of claims 1 to 6, the computer program product comprises instructions for performing the method according to any one of claims 11 to 17, or the computer program product comprises instructions for performing the method according to any one of claims 18 to 22.

26. A computer-readable storage medium, wherein the computer-readable storage medium stores a computer program, and when the computer program is run on a computer, the computer is enabled to perform the method according to any one of claims 1 to 6, the computer is enabled to perform the method according to any one of claims 11 to 17, or the computer is enabled to perform the method according to any one of claims 18 to 22.
